(19) Europäisches Patentamt / European Patent Office / Office européen des brevets

(11) **EP 3 543 266 A1**

(12) **EUROPEAN PATENT APPLICATION**
published in accordance with Art. 153(4) EPC

(43) Date of publication:
**25.09.2019 Bulletin 2019/39**

(21) Application number: **17872358.1**

(22) Date of filing: **13.11.2017**

(51) Int Cl.:
*C08G 18/00* (2006.01)   *A41C 3/10* (2006.01)
*A41C 3/14* (2006.01)   *A41D 13/015* (2006.01)
*C08G 18/78* (2006.01)   *C08G 18/79* (2006.01)

(86) International application number:
**PCT/JP2017/040761**

(87) International publication number:
**WO 2018/092717 (24.05.2018 Gazette 2018/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.11.2016 JP 2016223505**

(71) Applicant: **Mitsui Chemicals, Inc.**
**Minato-ku**
**Tokyo 105-7122 (JP)**

(72) Inventors:
• **MORITA, Hirokazu**
  **Sodegaura-shi**
  **Chiba 299-0265 (JP)**

• **KANAYAMA, Hiroshi**
  **Sodegaura-shi**
  **Chiba 299-0265 (JP)**
• **WATANABE, Minoru**
  **Sodegaura-shi**
  **Chiba 299-0265 (JP)**
• **NAKAGAWA, Toshihiko**
  **Sodegaura-shi**
  **Chiba 299-0265 (JP)**
• **YAMASAKI, Satoshi**
  **Sodegaura-shi**
  **Chiba 299-0265 (JP)**

(74) Representative: **Hoffmann Eitle**
**Patent- und Rechtsanwälte PartmbB**
**Arabellastraße 30**
**81925 München (DE)**

(54) **POLYURETHANE FOAM, GARMENT MATERIAL, BRASSIERE PAD, BRASSIERE CUP, AND METHOD FOR PRODUCING POLYURETHANE FOAM**

(57)    [Problem] To provide polyurethane foam excellent in air permeability and laundry durability, an apparel material, a brassiere pad, a brassiere cup, and a method for producing polyurethane foam.

[Solution] In polyurethane foam of a reaction/foaming product of a polyisocyanate component containing an aliphatic polyisocyanate derivative and a polyol component, the derivative has an isocyanate group concentration of 25 mass% or less, the derivative contains an isocyanurate derivative of aliphatic polyisocyanate and an allophanate derivative of aliphatic polyisocyanate, the allophanate derivative is a reaction product of aliphatic polyisocyanate and monohydric alcohol, the allophanate group content relative to a total amount of the polyisocyanate component is 10 mol% to 80 mol%, and the uretdione group content relative to a total amount of the polyisocyanate component is less than 10 mol%.

**EP 3 543 266 A1**

**Description**

**TECHNICAL FIELD**

The present invention relates to polyurethane foam, an apparel material, a brassiere pad, a brassiere cup, and a method for producing polyurethane foam. To be specific, the present invention relates to polyurethane foam, an apparel material including the polyurethane foam, a brassiere pad of a molded article of the apparel material, a brassiere cup including the brassiere pad, and a method for producing polyurethane foam for producing the polyurethane foam.

**BACKGROUND ART**

Polyurethane foam is produced by allowing a polyisocyanate component to react with a polyol component in the presence of a urethane-forming catalyst and a blowing agent, and is used in a wide range of fields.
It has been known that aromatic polyisocyanate is used for the polyisocyanate component, but the aromatic polyurethane foam produced by using aromatic polyisocyanate may discolor by exposure to ultraviolet ray or oxygen gas (for example, nitric oxide gas (NOx)).
Thus, use of aliphatic polyisocyanate and/or its derivative for the polyisocyanate component has been examined.
For example, Patent Document 1 has proposed using the following in a flexible polyurethane foam produced by allowing a mixture liquid of organic polyisocyanate (A), polyol (B), catalyst (C), blowing agent (D), foam stabilizer (E) to react and foam, and then cure: as the isocyanate component (A), a mixture of (A1) an allophanate-modified organic polyisocyanate composition composed of monol and aliphatic and/or alicyclic diisocyanate, (A2) an allophanate-modified organic polyisocyanate composition composed of alcohol including two or more hydroxyl groups and aliphatic and/or alicyclic diisocyanate, and (A3) an isocyanurate composition composed of aliphatic and/or alicyclic diisocyanate (for example, see Patent Document 1).
To be more specific, Patent Document 1 has proposed a mixture with a viscosity (25°C) of 588 mPa·s produced by mixing the (A1) allophanate-modified organic polyisocyanate composition produced by using monol, (A2) allophanate-modified organic polyisocyanate composition produced by using alcohol including two or more hydroxyl groups, and (A3) isocyanurate composition at, for example, a mass ratio of (A1:A2:A3) = 30:20:50; and a mixture with a viscosity (25°C) of 900 mPa·s produced by mixing (A1) allophanate-modified organic polyisocyanate composition produced by using monol, (A2) allophanate-modified organic polyisocyanate composition produced by using alcohol including two or more hydroxyl groups, and (A3) isocyanurate composition at, for example, a mass ratio (A1:A2:A3) = 20:60:20 (ref: for example, Patent Document 1 (Preparation Examples 24 to 25)).

Citation List

Patent Document

Patent Document 1: Japanese Unexamined Patent Publication No. 2012-077209

**SUMMARY OF THE INVENTION**

**PROBLEM TO BE SOLVED BY THE INVENTION**

Meanwhile, polyurethane foam has been recently required to have air permeability or laundry durability, and the polyurethane foam produced by using the polyisocyanate composition described in Patent Document 1 has disadvantages in that it is insufficient in air permeability and laundry durability.
An object of the present invention is to provide polyurethane foam with excellent air permeability and laundry durability, an apparel material including the polyurethane foam, a brassiere pad of a molded article of the apparel material, a brassiere cup including the brassiere pad, and a polyurethane foam production method for producing the polyurethane foam.

**MEANS FOR SOLVING THE PROBLEM**

The present invention [1] includes polyurethane foam being a reaction/foaming product of a polyisocyanate component containing an aliphatic polyisocyanate derivative and a polyol component, wherein the derivative has an isocyanate group concentration of 25 mass% or less, the derivative contains an isocyanurate derivative of aliphatic polyisocyanate and an allophanate derivative of aliphatic polyisocyanate, and the allophanate derivative is a reaction product of aliphatic polyisocyanate and monohydric alcohol, the allophanate group content relative to a total amount of the polyisocyanate component is 10 mol% or more and 80 mol% or less, and the uretdione group content relative to a total amount of the polyisocyanate component is below 10 mol%.

The present invention [2] includes the polyurethane foam of [1] described above, wherein the polyisocyanate component has a viscosity at 25 °C of more than 600 mPa·s and 3000 mPa·s or less.

The present invention [3] includes the polyurethane foam of [1] or [2] described above, wherein the derivative includes an allophanate bimolecular product of aliphatic polyisocyanate, and contains 5 mass% or more and 90 mass% or less of the allophanate bimolecular product of the aliphatic polyisocyanate relative to a total amount of the polyisocyanate component.

The present invention [4] includes the polyurethane foam of any one of [1] to [3] described above, wherein the aliphatic polyisocyanate contains pentamethylene diisocyanate and/or hexamethylene diisocyanate.

The present invention [5] includes the polyurethane foam of [4] described above, wherein the aliphatic polyisocyanate further contains alicyclic polyisocyanate.

The present invention [6] includes an apparel material including the polyurethane foam of any one of [1] to [5] described above.

The present invention [7] includes a brassiere pad, being a molded article of the apparel material of [6] described above.

The present invention [8] includes a brassiere cup, including the brassiere pad described in [7] above.

The present invention [9] includes a method for producing polyurethane foam, including allowing aliphatic polyisocyanate to react with monohydric alcohol to prepare an aliphatic polyisocyanate derivative containing an isocyanurate derivative of aliphatic polyisocyanate and an allophanate derivative of aliphatic polyisocyanate; and allowing the polyisocyanate component containing the derivative to react with a polyol component in the presence of a urethane-forming catalyst and a blowing agent, wherein the derivative has an isocyanate group concentration of 25 mass% or less, the allophanate group content relative to a total amount of the polyisocyanate component is 10 mol% or more and 80 mol% or less, and the uretdione group content relative to a total amount of the polyisocyanate component is less than 10 mol%.

Effects of the Invention

In the polyurethane foam of the present invention, the polyisocyanate component contains the aliphatic polyisocyanate derivative containing the isocyanurate derivative of aliphatic polyisocyanate and the allophanate derivative of aliphatic polyisocyanate, the allophanate derivative is a reaction product of the aliphatic polyisocyanate and monohydric alcohol, and the allophanate group content relative to a total amount of the polyisocyanate component is 10 mol or more and 80 mol or less, and the uretdione group content relative to a total amount of the polyisocyanate component is below 10 mol%. Therefore, the polyurethane foam of the present invention has excellent air permeability and laundry durability.

With the apparel material including the polyurethane foam of the present invention, and the brassiere pad of a molded article of the apparel material, and the brassiere cup, air permeability and laundry durability can be improved.

Furthermore, with the method for producing polyurethane foam of the present invention, polyurethane foam of the present invention can be produced.

Description of the embodiments

The polyurethane foam of the present invention is a reaction product of reaction between the polyisocyanate component and the polyol component and foaming thereof.

To be more specific, the polyurethane foam is produced by allowing the polyisocyanate component to react with the polyol component in the presence of a urethane-forming catalyst (described later) and a blowing agent (described later), and then to foam.

The polyisocyanate component contains an aliphatic polyisocyanate derivative.

Examples of the aliphatic polyisocyanate include open-chain (straight chain or branched-chain: noncyclic) aliphatic polyisocyanate, and to be specific, for example, open-chain aliphatic diisocyanates including ethylenediisocyanate, trimethylenediisocyanate, 1,2-propylenediisocyanate, butylenediisocyanate (tetramethylenediisocyanate, 1,2-butylenediisocyanate, 2,3-butylenediisocyanate, 1,3-butylenediisocyanate), 1,5-pentamethylene diisocyanate (PDI), 1,6-hexamethylene diisocyanate (HDI), 2,4,4- or 2,2,4-trimethylhexamethylene diisocyanate, 2,6-diisocyanatemethyl caproate, and dodecamethylenediisocyanate are used, and preferably 1,5-pentamethylene diisocyanate (PDI) and 1,6-hexamethylene diisocyanate (HDI) are used.

Examples of the aliphatic polyisocyanate include alicyclic polyisocyanate.

Examples of the alicyclic polyisocyanate include alicyclic diisocyanates such as 1,3-cyclopentene diisocyanate, 1,4-cyclohexanediisocyanate, 1,3-cyclohexanediisocyanate, 3-isocyanatomethyl-3,5,5-trimethylcyclohexylisocyanate (isophoronediisocyanate; IPDI), 4,4'-, 2,4'- or 2,2'-dicyclohexylmethanediisocyanate or a mixture thereof (hydrogenated MDI), methyl-2,4-cyclohexanediisocyanate, methyl-2,6-cyclohexanediisocyanate, 1,3- or 1,4-bis(isocyanatomethyl) cyclohexane or a mixture thereof (hydrogenated XDI), and norbornanediisocyanate (NBDI).

These aliphatic polyisocyanates may be used singly or in a combination of two or more.

For the aliphatic polyisocyanate, preferably, the open-chain aliphatic polyisocyanate is used, more preferably, the open-chain aliphatic diisocyanate is used, even more preferably, pentamethylene diisocyanate and hexamethylene diisocyanate are used.

When the aliphatic polyisocyanate contains open-chain aliphatic polyisocyanate (preferably, open-chain aliphatic diisocyanate), air permeability and laundry durability can be improved. When the aliphatic polyisocyanate contains pentamethylene diisocyanate and/or hexamethylene diisocyanate, reactivity can be improved.

For the aliphatic polyisocyanate, even more preferably, pentamethylene diisocyanate is used.

When the aliphatic polyisocyanate contains pentamethylene diisocyanate, flexibility, air permeability and laundry durability can be improved.

More preferably, the aliphatic polyisocyanate further contains alicyclic polyisocyanate. In other words, the aliphatic polyisocyanate more preferably contains pentamethylene diisocyanate and/or hexamethylene diisocyanate, and alicyclic polyisocyanate.

When the aliphatic polyisocyanate contains pentamethylene diisocyanate and/or hexamethylene diisocyanate, and alicyclic polyisocyanate, rebound resilience can be improved.

In such a case, the pentamethylene diisocyanate and/or hexamethylene diisocyanate content and the alicyclic polyisocyanate content are suitably set in accordance with purpose and use.

The aliphatic polyisocyanate derivative contains a symmetric-asymmetric isocyanurate group and an allophanate group.

That is, in the present invention, the aliphatic polyisocyanate derivative is an aliphatic polyisocyanate derivative composition, and contains an isocyanurate derivative of aliphatic polyisocyanate and an allophanate derivative of aliphatic polyisocyanate. Preferably, the aliphatic polyisocyanate derivative consists of an isocyanurate derivative of aliphatic polyisocyanate and an allophanate derivative of aliphatic polyisocyanate.

The symmetric-asymmetric isocyanurate group is defined as a symmetric isocyanurate group and/or an asymmetric isocyanurate group.

The symmetric-isocyanurate group is an isocyanurate group, and is contained in a symmetric trimer of the aliphatic polyisocyanate.

The asymmetric isocyanurate group is an iminooxadiazinedione group, and is contained in an asymmetric trimer of the aliphatic polyisocyanate.

In the aliphatic polyisocyanate derivative, the symmetric-asymmetric isocyanurate group content and the allophanate group content (molar ratio) are adjusted to be in a predetermined range, in view of air permeability and laundry durability.

To be specific, in the aliphatic polyisocyanate derivative, the allophanate group content relative to 100 mol of the symmetric-asymmetric isocyanurate group is, for example, 10 mol or more, preferably 12 mol or more, more preferably 20 mol or more, even more preferably 25 mol or more, particularly preferably 30 mol or more, and for example, 100 mol or less, preferably 90 mol or less, more preferably 80 mol or less, further preferably 70 mol or less.

When the allophanate group content is below the above-described lower limit, in the production of aliphatic polyisocyanate derivative to be described later, the trifunctional symmetric-asymmetric isocyanurate group will be excessive relative to the bifunctional allophanate group, and therefore crosslinking density will be high, and air permeability of polyurethane foam may be reduced.

Meanwhile, when the allophanate group content is more than the above-described upper limit, in the production of aliphatic polyisocyanate derivative to be described later, the bifunctional allophanate group will be excessive relative to the trifunctional symmetric-asymmetric isocyanurate group, and therefore crosslinking density will be low, and laundry durability of the polyurethane foam may be reduced.

In contrast, when the allophanate group content is within the above-described range, the crosslinking density can be adjusted appropriately, and therefore polyurethane foam with excellent air permeability and laundry durability can be produced.

In the aliphatic polyisocyanate derivative, the allophanate group content relative to 100 mol of a total amount of the symmetric-asymmetric isocyanurate group and allophanate group is, for example, 9 mol or more, preferably 11 mol or more, more preferably 17 mol or more, further preferably 23 mol or more, particularly preferably 29 mol or more, and for example, 50 mol or less, preferably 44 mol or less, more preferably 41 mol or less, further preferably 38 mol or less.

In the aliphatic polyisocyanate derivative, the symmetric-asymmetric isocyanurate group content relative to 100 mol of a total amount of the symmetric-asymmetric isocyanurate group and allophanate group is, for example, 50 mol or more, preferably 56 mol or more, more preferably 59 mol or more, further preferably 62 mol or more, and for example, 91 mol or less, preferably 89 mol or less, more preferably 83 mol or less, further preferably 77 mol or less, particularly preferably 71 mol or less.

The symmetric-asymmetric isocyanurate group and allophanate group content can be calculated from a mole ratio of the allophanate group to the symmetric-asymmetric isocyanurate group in the aliphatic polyisocyanate derivative obtained from the NMR chart measured by $^1$H-NMR method in accordance with Examples to be described later.

For example, when the $^1$H-NMR measurement is used, in the $^1$H-NMR measurement (400MHz, solvent: D[6]-DM-SO (solute: 5 mass%), primary standard substance: tetramethylsilane) of aliphatic polyisocyanate derivative, the peak of 8.3 to 8.7 ppm is assigned to the peak of protons of the allophanate group (NH group in allophanate group) of the aliphatic polyisocyanate, and the peak of 3.8 ppm is assigned to the peak of protons of the symmetric-asymmetric isocyanurate group (methylene group ($CH_2$ group) directly connected to symmetric-asymmetric isocyanurate group) of the aliphatic polyisocyanate. Then, their peak area ratio (ratio of integrated value) is calculated as the allophanate group content relative to the symmetric-asymmetric isocyanurate group.

Allophanate group content relative to the symmetric-asymmetric isocyanurate group = integrated value of assigned peak of protons of allophanate group/(integrated value of assigned peak of protons of symmetric-asymmetric isocyanurate group/6)

To produce the aliphatic polyisocyanate derivative, for example, the aliphatic polyisocyanate is allowed to react with monohydric alcohol in the presence of an isocyanurate-forming catalyst.

To be more specific, for example, the following methods are used: first, the above-described aliphatic polyisocyanate and monohydric alcohol are subjected to urethane-forming reaction, and then, subjected to isocyanurate-forming reaction in the presence of an isocyanurate-forming catalyst, and for example, first, aliphatic polyisocyanate is subjected to isocyanurate-formation in the presence of an isocyanurate-forming catalyst, and thereafter, monohydric alcohol is blended to be subjected to urethane-forming reaction.

Preferably, first, the above-described aliphatic polyisocyanate and monohydric alcohol are subjected to urethane-forming reaction, and then subjected to isocyanurate-forming reaction in the presence of an isocyanurate-forming catalyst.

In the isocyanurate-forming reaction, by blending monohydric alcohol, the aliphatic polyisocyanate goes through isocyanurate-formation, and also allophanate-formation. In other words, the isocyanurate-forming catalyst works as a catalyst for the isocyanurate-formation and allophanate-formation.

Examples of the monohydric alcohol include straight chain monohydric alcohol and branched monohydric alcohol.

Examples of the straight chain monohydric alcohol include C (number of carbons, the same applies in the following) 1 to 20 straight chain monohydric alcohol such as methanol, ethanol, n-propanol, n-butanol, n-pentanol, n-hexanol, n-heptanol, n-octanol, n-nonanol, n-decanol, n-undecanol, n-dodecanol (lauryl alcohol), n-tridecanol, n-tetradecanol, n-pentadecanol, n-hexadecanol, n-heptadecanol, n-octadecanol (stearyl alcohol), n-nonadecanol, and eicosanol.

Examples of the branched monohydric alcohol include C3 to 20 branched monohydric alcohol such as isopropanol, isobutanol (isobutyl alcohol), sec-butanol, tert-butanol, isopentanol, isohexanol, isoheptanol, isooctanol, 2-ethylhexane-1-ol, isononanol, isodecanol, 5-ethyl-2-nonanol, trimethylnonylalcohol, 2-hexyldecanol, 3,9-diethyl-6-tridecanol, 2-isoheptylisoundecanol, 2-octyldodecanol, and other branched alkanol (C5 to 20).

These monohydric alcohols may be used singly or in a combination of two or more.

For the monohydric alcohol, in view of decreasing the viscosity of the aliphatic polyisocyanate derivative, preferably, C1 to 20 straight chain monohydric alcohol, and C3 to 20 branched monohydric alcohol are used. More preferably, C3 to 20 branched monohydric alcohol is used, and even more preferably, isobutyl alcohol is used.

When alcohol with two or more hydroxyl groups is used instead of monohydric alcohol, air permeability and laundry durability of the polyurethane foam is reduced. Therefore, in view of air permeability and laundry durability, in the present invention, monohydric alcohol is used singly.

When the aliphatic polyisocyanate derivative has a low viscosity, compatibility with the polyol component can be improved, and air permeability and laundry durability of the polyurethane foam can be improved.

The monohydric alcohol is blended in an amount of, relative to 100 parts by mass of the aliphatic polyisocyanate, for example, 0.2 parts by mass or more, preferably 0.5 parts by mass or more, more preferably 1.0 part by mass or more, further preferably 1.5 parts by mass or more, and for example, 20 parts by mass or less, preferably 10 parts by mass or less, more preferably 5 parts by mass or less.

When the mixing ratio of the alcohol is within the above-described range, the allophanate derivative of aliphatic polyisocyanate content (that is, allophanate group content in aliphatic polyisocyanate derivative) relative to the isocyanurate derivative of aliphatic polyisocyanate can be adjusted.

The urethane-forming reaction conditions are, under an atmosphere of inert gas such as nitrogen gas, and normal pressure (atmospheric pressure), the reaction temperature is, for example, room temperature (for example, 25°C) or more, preferably 40°C or more, and for example, 100°C or less, preferably 90°C or less. The reaction time is, for example, 0.5 hours or more, preferably 1 hour or more, and for example, 10 hours or less, preferably 6 hours or less, more preferably 3 hours or less.

In the above-described urethane-forming reaction, a known urethane-forming catalyst (for example, amines (described later), and an organometallic compound (described later)) can be blended. The urethane-forming catalyst is blended in an amount without particular limitation, and is suitably set in accordance with purpose and use.

The partly urethane-modified aliphatic polyisocyanate (that is, aliphatic polyisocyanate composition including urethane-modified aliphatic polyisocyanate and (unreacted) aliphatic polyisocyanate) can be produced in this manner.

Then, the partly urethane-modified aliphatic polyisocyanate is subjected to isocyanurate-forming reaction (isocyanurate-formation and allophanate-formation reaction) in the presence of an isocyanurate-forming catalyst (isocyanurate-formation·allophanate-formation catalyst).

Examples of the isocyanurate-forming catalyst include quaternary ammonium compounds, and to be specific, for example, hydroxides or organic weak acid salts of tetraalkyl ammonium such as tetramethyl ammonium, tetraethyl ammonium, tetrabutyl ammonium, trimethylbenzyl ammonium, and tributylbenzyl ammonium, and hydroxides or organic weak acid salts of trialkylhydroxyalkyl ammonium (for example, N-(2-hydroxypropyl)-N,N,N-trimethyl ammonium-2-ethylhexanoate) such as trimethylhydroxypropyl ammonium (also called: N-(2-hydroxypropyl)-N,N,N-trimethyl ammonium), trimethylhydroxyethyl ammonium, triethylhydroxypropyl ammonium, and triethylhydroxyethyl ammonium are used.

Examples of the isocyanurate-forming catalyst include, in addition to the above-described ones, metal salts (for example, alkali metal salt, magnesium salt, tin salt, zinc salt, lead salt) of alkylcarboxylic acid such as acetic acid, caproic acid, octylic acid, myristic acid, and naphthenic acid; metal chelate compounds of β-diketones such as aluminum acetylacetone and lithium acetylacetonate; Friedel-Crafts catalysts such as aluminum chloride and boron trifluoride; various organometallic compounds such as titaniumtetrabutyrate and tributylantimonyoxide; and aminosilyl group-containing compounds such as hexamethylsilazane.

These isocyanurate-forming catalysts may be used singly or in a combination of two or more.

For the isocyanurate-forming catalyst, in view of productivity and yellowing resistance, preferably, quaternary ammonium compound is used, more preferably, organic weak acid salt of trialkylhydroxyalkylammonium is used, even more preferably, N-(2-hydroxypropyl)-N,N,N-trimethylammonium-2-ethylhexanoate is used.

The isocyanurate-forming catalyst (based on 100% active component) is blended in an amount of, relative to 100 parts by mass of the aliphatic polyisocyanate, for example, 0.001 parts by mass or more, preferably 0.003 parts by mass or more, and for example, 0.1 parts by mass or less, preferably 0.05 parts by mass or less.

The reaction conditions for the isocyanurate-forming reaction are as follows: under atmosphere of inert gas such as nitrogen gas, normal pressure (atmospheric pressure), the reaction temperature is, for example, 50°C or more, preferably 70°C or more, more preferably 80°C or more, and for example, 120°C or less, preferably 100°C or less. The reaction time is, for example, 5 minutes or more, preferably 10 minutes or more, more preferably 15 minutes or more, and for example, 120 minutes or less, preferably 60 minutes or less.

In the above-described isocyanurate-forming reaction, at the point when a predetermined reaction rate (isocyanate group conversion rate) is reached, a reaction terminator such as, for example, phosphoric acid, monochloroacetic acid, benzoyl chloride, dodecylbenzenesulfonic acid, toluenesulfonic acid (o- or p-toluenesulfonic acid), and derivatives thereof (for example, o- or p-toluenesulfonic acid methyl ester), toluenesulfonamide (o- or p-toluenesulfonamide) is added to the reaction solution to inactivate the catalyst to terminate the isocyanurate-forming reaction. In this case, an adsorbent that adsorbs the catalysts such as chelate resin and ion exchange resin can be added to terminate the isocyanurate-forming reaction.

The isocyanate group conversion rate at the time of termination of the isocyanurate-forming reaction is, for example, 1 mass% or more, preferably 5 mass% or more, and for example, 20 mass% or less, preferably 15 mass% or less.

The isocyanate group conversion rate can be measured based on, for example, high-performance GPC, NMR, isocyanate group concentration, refraction, density, and infrared spectrum.

Thus, the partly urethane-modified aliphatic polyisocyanate is subjected to isocyanurate-forming reaction, and an isocyanurate derivative can be produced in this manner. In this method, along with the above-described isocyanurate-forming reaction, the partly urethane-modified aliphatic polyisocyanate can be subjected to allophanate-formation reaction. In this manner, the isocyanurate derivative of aliphatic polyisocyanate and allophanate derivative of aliphatic polyisocyanate can be produced at once.

In the above-described isocyanurate-forming reaction, to adjust the isocyanurate-formation, for example, organic phosphite such as the one described in Japanese Unexamined Patent Publication No.S61-129173 can be blended as an auxiliary catalyst.

Examples of the organic phosphite include organic phosphorous acid diester and organic phosphorous acid triester, and to be more specific, monophosphites such as triethylphosphite, tributylphosphite, tridecylphosphite, tris (tridecyl) phosphite, triphenylphosphite, tris (nonylphenyl) phosphite, tris (2,4-di-t-butylphenyl) phosphite, and diphenyl (tridecyl) phosphite; and di, tri, or tetra phosphites derived from polyhydric alcohols such as distearyl·pentaerythrityl·diphosphite, tripentaerythritol·triphosphite, and tetraphenyl·dipropylene glycol·diphosphite are used.

These organic phosphites may be used singly or in a combination of two or more.

For the organic phosphite, preferably, monophosphites are used, and more preferably, tridecylphosphite and tris (tridecyl) phosphite are used.

The organic phosphite is blended in an amount of, relative to 100 parts by mass of the aliphatic polyisocyanate, for example, 0.01 parts by mass or more, preferably 0.05 parts by mass or more, more preferably 0.10 parts by mass or more, and for example, 1.0 part by mass or less, preferably 0.50 parts by mass or less.

In the above-described isocyanurate-forming reaction, as necessary, a reaction stabilizer including a hindered phenol antioxidant such as 2,6-di(tert-butyl)-4-methylphenol (BHT), IRGANOX 1010, IRGANOX 1076, IRGANOX 1135, and IRGANOX 245 (all manufactured by BASF Japan, trade name) can also be blended.

The reaction stabilizer is blended in an amount of, relative to 100 parts by mass of the aliphatic polyisocyanate, for example, 0.01 parts by mass or more, preferably 0.05 parts by mass or more, and for example, 1.0 part by mass or less, preferably 0.10 parts by mass or less.

The above-described auxiliary catalyst and reaction stabilizer can be added at the time of the above-described urethane-forming reaction.

In the above-described isocyanurate-forming reaction, as necessary, a known reaction solvent can be blended.

Then, after the completion of the reaction, by removing the unreacted aliphatic polyisocyanate (when blending catalyst, reaction solvent and/or catalyst inactivator, including also catalyst, reaction solvent and/or catalyst inactivator) from the produced reaction mixture liquid by, for example, a known method such as distillation including thin film distillation (Smith distillation), and extraction, aliphatic polyisocyanate derivative can be produced.

After the removal of the unreacted aliphatic polyisocyanate, the above-described reaction terminator can be added as a stabilizer at an arbitrary amount to the produced aliphatic polyisocyanate derivative.

By such a method, an isocyanurate derivative, i.e., a reaction product of aliphatic polyisocyanate and monohydric alcohol, and an allophanate derivative, i.e., a reaction product of aliphatic polyisocyanate and monohydric alcohol can be produced at once.

The produced aliphatic polyisocyanate derivative contains the symmetric-asymmetric isocyanurate group and allophanate group, and also the symmetric-asymmetric isocyanurate group content and the allophanate group content are adjusted to be within the above-described range. Therefore, with the aliphatic polyisocyanate derivative, air permeability and laundry durability can be improved.

As long as the symmetric-asymmetric isocyanurate group content and the allophanate group content in the aliphatic polyisocyanate derivative are adjusted to be within the above-described range, without limitation to the above-described production method, two or more of differently formulated aliphatic polyisocyanate derivatives can be blended for the preparation.

To be more specific, for example, by separately preparing isocyanurate derivative of aliphatic polyisocyanate and the allophanate derivative of aliphatic polyisocyanate, and mixing them, the aliphatic polyisocyanate derivative (derivative composition) containing the symmetric-asymmetric isocyanurate group and the allophanate group can be produced.

The isocyanurate derivative of aliphatic polyisocyanate contains the symmetric-asymmetric isocyanurate group, and contains no allophanate group, or a trace amount of (described later) derivative.

The isocyanurate derivative of aliphatic polyisocyanate containing no allophanate group can be produced by, for example, subjecting the aliphatic polyisocyanate to the isocyanurate-forming reaction in the presence of an isocyanurate-forming catalyst without blending monohydric alcohol in the above-described isocyanurate-forming reaction. That is, when no monohydric alcohol is blended, the isocyanurate-forming catalyst works simply as the isocyanurate-forming catalyst, not as the isocyanurate-formation·allophanate-formation catalyst. The reaction conditions for the isocyanurate-forming reaction are the same as the above-described ones.

However, the symmetric-asymmetric isocyanurate group is easily formed through urethane-forming reaction. Therefore, by blending a trace amount of alcohol, the isocyanurate-forming reaction can be accelerated. In this case, the isocyanurate derivative of aliphatic polyisocyanate containing a trace amount of allophanate group can be produced.

To produce the isocyanurate derivative of aliphatic polyisocyanate containing a trace amount of allophanate group, for example, in the above-described method (method in which first, the above-described aliphatic polyisocyanate and alcohol are subjected to urethane-forming reaction, and then, subjected to isocyanurate-forming reaction in the presence of an isocyanurate-forming catalyst), a relatively small amount of the alcohol is blended.

Examples of such alcohol include the above-described monohydric alcohol, and known dihydric alcohol (for example, ethylene glycol, 1,3-propanediol, 1,3-butanediol, 1,4-butanediol, and 3-methyl-pentanediol). They can be used singly, or can be used in combination of two or more.

The alcohol is blended in an amount of, relative to 100 parts by mass of the aliphatic polyisocyanate, for example, 0.01 parts by mass or more, preferably 0.05 parts by mass or more, and for example, 0.5 parts by mass or less, preferably 0.3 parts by mass or less.

In this manner, the amount of allophanate group produced by reaction of aliphatic polyisocyanate and alcohol can be suppressed.

Then, the produced reaction product is subjected to isocyanurate-forming reaction in the presence of an isocyanurate-forming catalyst. The reaction conditions in the isocyanurate-forming reaction are the same as the above-described ones.

The allophanate group content in the isocyanurate derivative of aliphatic polyisocyanate relative to 100 mol of the symmetric-asymmetric isocyanurate group is, for example, less than 10 mol, preferably 8 mol or less, more preferably 7 mol or less, and generally 0 mol or more.

In other words, the isocyanurate derivative of aliphatic polyisocyanate may contain the allophanate derivative produced by reaction of aliphatic polyisocyanate and alcohol (monohydric alcohol, dihydric alcohol) in the above-described range.

The allophanate derivative of aliphatic polyisocyanate is a derivative containing the allophanate group, and containing no symmetric-asymmetric isocyanurate group or a trace amount of (described later) the symmetric-asymmetric isocyanurate group.

The allophanate derivative of aliphatic polyisocyanate can be produced by, for example, allowing the above-described aliphatic polyisocyanate to react with the above-described monohydric alcohol, and then, subjecting it to the allophanate-formation reaction in the presence of an allophanate-formation catalyst.

Examples of the monohydric alcohol include the above-described monohydric alcohol (monohydric alcohol in isocyanurate-formation), and they can be used singly, or can be used in combination of two or more. For the monohydric alcohol, preferably, branched monohydric alcohol is used, more preferably, isobutyl alcohol is used.

When the allophanate derivative of aliphatic polyisocyanate derivative is produced, alcohol is blended in an amount relative to 100 parts by mass of the aliphatic polyisocyanate of, for example, more than 3 parts by mass, preferably 3.2 parts by mass or more, more preferably 3.5 parts by mass or more, and for example, 50 parts by mass or less, preferably 20 parts by mass or less, more preferably 10 parts by mass or less.

In this reaction, in the range that does not hinder excellent effects of the present invention, as necessary, the above-described monohydric alcohol and an active hydrogen group-containing compound such as thiols, oximes, lactams, phenols, and βdiketones can be used in combination.

Reaction conditions for the reaction between the aliphatic polyisocyanate and alcohol are as follows: under atmosphere of inert gas such as nitrogen gas, and normal pressure (atmospheric pressure), the reaction temperature is, for example, room temperature (for example, 25°C) or more, preferably 40°C or more, and for example, 100°C or less, preferably 90°C or less. The reaction time is, for example, 0.05 hours or more, preferably 0.2 hours or more, and for example, 10 hours or less, preferably 6 hours or less.

In this manner, aliphatic polyisocyanate and alcohol are subjected to urethane-forming reaction.

In the above-described urethane-forming reaction, as necessary, a known urethane-forming catalyst (for example, amines (described later), and organometallic compound (described later)) can be blended. The amount of the urethane-forming catalyst blended is not particularly limited, and is suitably set in accordance with purpose and use.

Then, in this method, an allophanate-formation catalyst is blended to the produced reaction solution, and the reaction product of the aliphatic polyisocyanate and alcohol are subjected to allophanate-formation reaction.

Examples of the allophanate-formation catalyst include organic carboxylic acid bismuth salts such as octylic acid bismuth and tris (2-ethylhexanoic acid) bismuth, and organic carboxylic acid lead salt such as lead octylate.

These allophanate-formation catalysts may be used singly or in a combination of two or more.

For the allophanate-formation catalyst, preferably, organic carboxylic acid bismuth salt is used, more preferably, tris (2-ethylhexanoic acid) bismuth is used.

The allophanate-formation catalyst is added in an amount of, relative to 100 parts by mass of the aliphatic polyisocyanate, for example, 0.001 parts by mass or more, preferably 0.002 parts by mass or more, more preferably 0.01 parts by mass or more, and for example, 0.3 parts by mass or less, preferably 0.05 parts by mass or less, more preferably 0.03 parts by mass or less.

The reaction conditions for the allophanate-formation reaction are as follows: under atmosphere of inert gas such as nitrogen gas, and normal pressure (atmospheric pressure), the reaction temperature is, 0°C or more, preferably 20°C or more, and for example, 160°C or less, preferably 120°C or less. The reaction time is, for example, 30 minutes or more, preferably 60 minutes or more, and for example, 1200 minutes or less, preferably 600 minutes or less.

In the above-described allophanate-formation reaction, at the point where a predetermined reaction rate (isocyanate group conversion rate) is reached, the reaction terminator is added to the reaction solution to inactivate the catalyst to terminate the allophanate-formation reaction. In this case, an adsorbent that adsorbs the catalyst such as chelate resin and ion exchange resin can be added to terminate the allophanate-formation reaction. For the reaction terminator to terminate the allophanate-formation reaction, the reaction terminator to terminate the isocyanurate-forming reaction can be used.

The isocyanate group conversion rate at the time of termination of the allophanate-formation reaction is, for example, 1 mass% or more, preferably 5 mass% or more, and for example, 20 mass% or less, preferably 15 mass% or less.

The isocyanate group conversion rate can be measured based on, for example, high-performance GPC, NMR, isocyanate group concentration, refraction, density, and infrared spectrum.

In this manner, the aliphatic polyisocyanate can be subjected to allophanate-formation reaction.

In the above-described reaction, to adjust urethane-formation and allophanate-formation, for example, the above-described organic phosphite can also be blended as an auxiliary catalyst. The organic phosphite can be used singly, or can be used in combination of two or more. For the organic phosphite, preferably, monophosphites, more preferably, tris (tridecyl) phosphite is used.

The organic phosphite is added in an amount of, relative to 100 parts by mass of the aliphatic polyisocyanate, for example, 0.01 parts by mass or more, preferably 0.02 parts by mass or more, more preferably 0.03 parts by mass or more, and for example, 0.2 parts by mass or less, preferably 0.15 parts by mass or less, more preferably 0.1 parts by mass or less.

The above-described auxiliary catalyst and reaction stabilizer can also be added at the time of the above-described urethane-forming reaction.

In the above-described allophanate-formation reaction, as necessary, a known reaction solvent can be blended.

Then, after the completion of reaction, by removing the unreacted aliphatic polyisocyanate (when catalyst, reaction solvent and/or catalyst inactivator are blended, including catalyst, reaction solvent and/or catalyst inactivator) from the produced reaction mixture liquid by, for example, a known method such as distillation including thin film distillation (Smith distillation), and extraction, the allophanate derivative of aliphatic polyisocyanate can be produced. After the removal of the unreacted aliphatic polyisocyanate, the above-described reaction terminator can be added as a stabilizer at an arbitrary amount to the produced allophanate derivative of aliphatic polyisocyanate.

The symmetric-asymmetric isocyanurate group content in the allophanate derivative of aliphatic polyisocyanate is, relative to 100 mol of the allophanate group, for example, 5 mol or less, preferably 3 mol or less, more preferably 2.5 mol or less, and generally 0 mol or more.

In other words, the allophanate derivative of aliphatic polyisocyanate may contain the isocyanurate derivative produced by the reaction of aliphatic polyisocyanate and alcohol (monohydric alcohol) in the above-described range.

Then, by mixing the above-described isocyanurate derivative of aliphatic polyisocyanate and the above-described allophanate derivative of aliphatic polyisocyanate by a known method, aliphatic polyisocyanate derivative having a symmetric-asymmetric isocyanurate group and allophanate group as a mixture (composition) can be produced.

The mixing ratio of the isocyanurate derivative of aliphatic polyisocyanate and the allophanate derivative of aliphatic polyisocyanate is adjusted such that the produced mixture has a ratio of the allophanate group to the symmetric-asymmetric isocyanurate group in the above-described predetermined range.

To be specific, relative to 100 parts by mass of a total amount of the isocyanurate derivative of aliphatic polyisocyanate and the allophanate derivative of aliphatic polyisocyanate, the isocyanurate derivative of aliphatic polyisocyanate is blended in an amount of, for example, 50 parts by mass or more, preferably 60 parts by mass or more, more preferably 80 parts by mass or more, and for example, 96 parts by mass or less, preferably 90 parts by mass or less. The allophanate derivative of aliphatic polyisocyanate is, for example, 4 parts by mass or more, preferably 10 parts by mass or more, and for example, 50 parts by mass or less, preferably 40 parts by mass or less, more preferably 20 parts by mass or less.

The aliphatic polyisocyanate derivative (derivative composition) may contain the unreacted aliphatic polyisocyanate monomer relative to 100 parts by mass of the aliphatic polyisocyanate derivative in an amount of, for example, 1.0 part by mass or less, preferably 0.5 parts by mass or less.

As described above, the aliphatic polyisocyanate derivative can be a reaction product produced by allowing the aliphatic polyisocyanate and monohydric alcohol to react (isocyanurate-formation reaction and allophanate-formation reaction) in the presence of an isocyanurate-forming catalyst, or can be a derivative composition produced by separately preparing the isocyanurate derivative of aliphatic polyisocyanate and the allophanate derivative of aliphatic polyisocyanate, and mixing them. Preferably, a reaction product produced by allowing the aliphatic polyisocyanate and monohydric alcohol to react in the presence of an isocyanurate-forming catalyst is used.

Furthermore, such a reaction product (reaction product produced by allowing aliphatic polyisocyanate and monohydric alcohol to react in the presence of an isocyanurate-forming catalyst), separately prepared isocyanurate derivative of aliphatic polyisocyanate, and/or, separately prepared allophanate derivative of aliphatic polyisocyanate can be used in combination.

Then, the aliphatic polyisocyanate derivative preferably contains the allophanate bimolecular product of aliphatic polyisocyanate.

The allophanate bimolecular product of aliphatic polyisocyanate is, to be specific, a compound in which a bimolecular aliphatic polyisocyanate are bonded through an allophanate group, and has unreacted isocyanate groups at molecular ends.

For example, the isocyanate group at one molecular end of the aliphatic diisocyanate is allowed to react with the above-described monohydric alcohol, and furthermore, an isocyanate group of another aliphatic diisocyanate is allowed to react with the urethane group of the reaction portion to form an allophanate group. In this manner, allophanate bimolecular product of aliphatic diisocyanate is produced.

The aliphatic polyisocyanate has an allophanate bimolecular product content of, relative to a total amount of the polyisocyanate component, for example, 1 mass% or more, preferably 5 mass% or more, more preferably 10 mass% or more, further preferably 20 mass% or more, particularly preferably 30 parts by mass or more, and for example, 99 mass% or less, preferably 95 mass% or less, more preferably 90 mass% or less, further preferably 80 mass% or less, particularly preferably 70 mass% or less.

When the aliphatic polyisocyanate has an allophanate bimolecular product content within the above-described range, flexibility, air permeability, and laundry durability of the produced polyurethane foam can be improved.

The allophanate bimolecular product content can be determined by gel permeation chromatography (GPC) in accordance with Examples to be described later.

To be specific, for example, when pentamethylene diisocyanate is used as aliphatic polyisocyanate, and the polyisocyanate component contains only a pentamethylene diisocyanate derivative, in a chromatogram of the gel permeation chromatograph measurement of the polyisocyanate component, the ratio of the peak area having a peak top between polyethylene oxide-based molecular weight of 330 to 430, preferably 370 to 390 relative to a total peak area (hereinafter referred to as bimolecular product area percentage) corresponds to the allophanate bimolecular product content of pentamethylene diisocyanate.

When hexamethylene diisocyanate is used as the aliphatic polyisocyanate, and the polyisocyanate component contains only the hexamethylene diisocyanate derivative, in a chromatogram of the gel permeation chromatograph measurement of the polyisocyanate component, the ratio of the peak area having a peak top between polyethylene oxide-based molecular weight 360 to 460, preferably 400 to 420 relative to a total peak area (hereinafter referred to as bimolecular product area percentage) corresponds to the allophanate bimolecular product content of pentamethylene diisocyanate.

That is, the bimolecular product area percentage can be calculated by, in accordance with Examples to be described later, measuring the molecular weight distribution of aliphatic polyisocyanate derivative with gel permeation chromatograph (GPC) equipped with refractive index detector (RID), as the peak area ratio in the obtained chromatogram (chart).

When the polyisocyanate component contains, for example, a plurality of types of aliphatic polyisocyanate derivatives, or for example, other polyisocyanate monomer and/or its derivative (to be specific, described later), the bimolecular product area percentage (allophanate bimolecular product content of aliphatic polyisocyanate) can be calculated based on the amount charged relative to a total of the polyisocyanate component.

To be specific, first, the bimolecular product area percentage (allophanate bimolecular product content of aliphatic polyisocyanate) of the aliphatic polyisocyanate derivatives and other polyisocyanate monomer and/or its derivative is measured, and then, the bimolecular product area percentage is multiplied by the ratio of the components used, and they are summed up. In this manner, the bimolecular product area percentage relative to the polyisocyanate component in total can be calculated.

Furthermore, the aliphatic polyisocyanate derivative can also contain derivatives other than the isocyanurate derivative and allophanate derivative (in the following, referred to as other derivatives).

Examples of the other derivative include biuret derivative (biuret derivative produced by reaction of, for example, the above-described aliphatic polyisocyanate with water or amines), urea derivative (urea derivative produced by reaction of, for example, the above-described aliphatic polyisocyanate with diamine), oxadiazinetrione derivative (oxadiazinetrione derivative produced by reaction of, for example, the above-described aliphatic polyisocyanate and carbon dioxide), carbodiimide derivative (carbodiimide derivative produced by decarboxylation condensation reaction of the above-described aliphatic polyisocyanate), polyol derivative (polyol derivative (alcohol adduct) produced by reaction between the above-described aliphatic polyisocyanate with low molecular-weight polyol to be described later (preferably, low molecular-weight triol to be described later), polyol derivative produced by reaction between the above-described aliphatic polyisocyanate with low molecular-weight polyol and/or high molecular weight polyol (preferably, high molecular weight polyol to be described later)), and iminooxadiazinedione derivative of aliphatic polyisocyanate.

These other derivatives may be used singly or in a combination of two or more.

The other derivatives are contained in the form of the following without particular limitation: the other derivatives are produced as by-products in the above-described reactions (urethane-forming, isocyanurate-forming, and allophanate-forming reactions) and the other derivatives are contained in the aliphatic polyisocyanate derivative. Also, for example, separately prepared other derivatives can be added to the polyisocyanate derivative.

The aliphatic polyisocyanate derivative contains no uretdione derivative of aliphatic polyisocyanate as the other derivatives, or contains a trace amount thereof (described later). That is, in the synthesis of the above-described aliphatic polyisocyanate derivative, the uretdione group content in the polyisocyanate component is adjusted in the range (to be specific, less than 10 mol% relative to the total amount of the polyisocyanate component) to be described later.

The other derivative content is not particularly limited as long as the allophanate group content and the symmetric-asymmetric isocyanurate group content in the aliphatic polyisocyanate derivative (derivative composition) are adjusted to be in the above-described range, and for example, relative to 100 parts by mass of a total amount of the aliphatic polyisocyanate derivative, 1 part by mass or more, preferably 5 parts by mass or more, and for example, 10 parts by mass or less, preferably 5 parts by mass or less.

The aliphatic polyisocyanate derivative has an isocyanate group equivalent of, for example, 150 or more, preferably 200 or more, or for example, 750 or less, preferably 500 or less.

The isocyanate group equivalent is the same as the amine equivalent, and can be determined by the method A or B of JIS K 1603-1(2007) (the same applies in the following).

The aliphatic polyisocyanate derivative has an average functional group of, for example, 2.00 or more, preferably 2.10 or more, and for example, 2.90 or less, preferably 2.80 or less.

the aliphatic polyisocyanate derivative has an isocyanate group concentration of, for example, 18 mass% or more, preferably 20 mass% or more, and 25 mass% or less, preferably 24 mass% or less.

When the aliphatic polyisocyanate derivative has an isocyanate group concentration of more than the above-described upper limit, air permeability and laundry durability are reduced. Therefore, in view of air permeability and laundry durability, the aliphatic polyisocyanate derivative has an isocyanate group concentration of the above-described upper limit or less.

The isocyanate group concentration can be determined in accordance with Examples to be described later (the same applies in the following).

The aliphatic polyisocyanate derivative has a viscosity at 25°C of, for example, 20 mPa·s or more, preferably 100 mPa·s or more, more preferably 300 mPa·s or more, further preferably 500 mPa·s or more, further preferably more than 600 mPa·s, particularly preferably 650 mPa·s or more, and for example, 5000 mPa·s, preferably 3000 mPa·s or less, more preferably 1500 mPa·s or less, further preferably 1000 mPa·s or less, further preferably 980 mPa·s or less, particularly preferably 800 mPa·s or less.

When the aliphatic polyisocyanate derivative has a viscosity in the above-described range, workability in the polyurethane foam production can be improved.

The viscosity can be determined in accordance with Examples to be described later (the same applies in the following).

The polyisocyanate component can contain an aliphatic polyisocyanate derivative solely, and furthermore, in addition to the aliphatic polyisocyanate derivative, other polyisocyanate and/or other derivative can also be contained.

Examples of the other polyisocyanate and/or its derivative include polyisocyanate monomer (here, excluding aliphatic polyisocyanate), and polyisocyanate derivative (here, excluding aliphatic polyisocyanate derivative).

Examples of the polyisocyanate monomer include polyisocyanates such as aromatic polyisocyanate and araliphatic polyisocyanate.

Examples of the aromatic polyisocyanate include aromatic diisocyanates such as m- or p-phenylenediisocyanate or a mixture thereof, 2,4- or 2,6-tolylene diisocyanate or a mixture thereof (TDI), 4,4'-, 2,4'- or 2,2'-diphenylmethane diisocyanate or a mixture thereof (MDI), 4,4'-toluidinediisocyanate (TODI), 4,4'-diphenyletherdiisocyanate, 4,4'-diphenyldiisocyanate, and 1,5-naphthalenediisocyanate (NDI).

Examples of the araliphatic polyisocyanate include araliphatic diisocyanates such as 1,3- or 1,4-xylylenediisocyanate or a mixture thereof (XDI), 1,3- or 1,4-tetramethylxylylenediisocyanate or a mixture thereof (TMXDI), and $\omega,\omega'$-diisocyanate-1,4-diethylbenzene.

These polyisocyanate monomers may be used singly or in a combination of two or more.

Examples of the polyisocyanate derivative include multimers (for example, dimers, trimers, pentamers, heptamers), allophanate derivatives (for example, allophanate derivative produced by reaction of the above-described polyisocyanate monomer and alcohol), biuret derivatives (for example, biuret derivatives produced by reaction of the above-described polyisocyanate monomer, water or amines), urea derivatives (for example, urea derivative produced by reaction of the above-described polyisocyanate monomer and diamine), oxadiazinetrione derivative (for example, oxadiazinetrione derivative produced by reaction of the above-described polyisocyanate monomer and carbon dioxide), carbodiimide derivatives (carbodiimide derivative produced by decarboxylation condensation reaction of the above-described polyisocyanate monomer), polyol derivatives (for example, polyol derivative (alcohol adduct) produced by reaction of the above-described polyisocyanate monomer and low molecular-weight polyol to be described later (preferably, low molecular-weight triol to be described later) and polyol derivative (polyisocyanate group-terminated prepolymer) produced by reaction of the above-described polyisocyanate monomer and low molecular-weight polyol to be described later and/or high molecular weight polyol (preferably, high molecular weight polyol to be described later)) of the above-described polyisocyanate monomer.

These polyisocyanate derivatives may be used singly or in a combination of two or more.

These other polyisocyanate and/or derivative thereof can be used singly, or can be used in combination of two or more.

In the polyisocyanate component, the component other than the aliphatic polyisocyanate derivative (other polyisocyanate and/or derivative thereof) is contained in an amount relative to a total amount of the aliphatic polyisocyanate derivative of, for example, less than 50 mass%, preferably 30 mass% or less, more preferably 10 mass% or less, particularly preferably 0 mass%.

That is, the polyisocyanate component preferably contains the aliphatic polyisocyanate derivative solely.

The thus prepared polyisocyanate component has an isocyanate group equivalent of, for example, 150 or more, preferably 200 or more, and for example, 750 or less, preferably 500 or less.

The polyisocyanate component has an average functional group of, for example, 2.00 or more, preferably 2.10 or more, and for example, 2.90 or less, preferably 2.80 or less.

The polyisocyanate component has an isocyanate group concentration of, for example, 18 mass% or more, preferably 20 mass% or more, and 25 mass% or less, preferably 24 mass% or less.

The polyisocyanate component has a viscosity at 25°C of, for example, 20 mPa·s or more, preferably 100 mPa·s or more, more preferably 300 mPa·s or more, further preferably 500 mPa·s or more, further preferably more than 600 mPa·s, particularly preferably 650 mPa·s or more, and for example, 5000 mPa·s, preferably 3000 mPa·s or less, more preferably 1500 mPa·s or less, further preferably 1000 mPa·s or less, further preferably 980 mPa·s or less, particularly preferably 800 mPa·s or less.

When the isocyanate component has a viscosity in the above-described range, workability in the polyurethane foam production can be improved.

The polyisocyanate component contains the aliphatic polyisocyanate derivative including the above-described symmetric-asymmetric isocyanurate group and allophanate group. Therefore, the polyisocyanate component includes the symmetric-asymmetric isocyanurate group and allophanate group.

In the polyisocyanate component, the symmetric-asymmetric isocyanurate group content is, relative to a total amount of the polyisocyanate component, 20 mol% or more, preferably 30 mol% or more, more preferably 40 mol% or more, and 90 mol% or less, preferably 80 mol% or less, more preferably 70 mol% or less.

When the symmetric-asymmetric isocyanurate group content is in the above-described range, polyurethane foam with excellent air permeability and laundry durability can be produced.

In the polyisocyanate component, the allophanate group content is, relative to a total amount of the polyisocyanate component, 10 mol% or more, preferably 20 mol% or more, more preferably 30 mol% or more, and 80 mol% or less, preferably 70 mol% or less, more preferably 60 mol% or less.

When the allophanate group content is in the above-described range, polyurethane foam with excellent air permeability and laundry durability can be produced.

The polyisocyanate component contains no uretdione group, or contains a small amount in the range that does not hinder the excellent effects of the present invention.

To be specific, the polyisocyanate component has a uretdione group content of, relative to a total amount of the polyisocyanate component, less than 10 mol%, preferably 5 mol% or less, more preferably 3 mol% or less, further preferably 1 mol% or less, particularly preferably 0 mol%. That is, the polyisocyanate component preferably contains no uretdione group.

When the uretdione group content of the polyisocyanate component is in the above-described range, polyurethane foam with excellent air permeability and laundry durability can be produced.

In other words, when the uretdione group content of the polyisocyanate component is more than the above-described upper limit, air permeability and laundry durability of the polyurethane foam are reduced.

The amount of the symmetric-asymmetric isocyanurate group, allophanate group, and uretdione group content contained in the polyisocyanate component can be calculated from the mole ratio of the allophanate group to the symmetric-asymmetric isocyanurate group obtained from NMR chart based on $^1$H-NMR measurement, and the mole ratio of the uretdione group to the symmetric-asymmetric isocyanurate group obtained from NMR chart based on $^{13}$C-NMR in accordance with Examples to be described later.

Then, as described above, by allowing the polyisocyanate component to react with the polyol component in the presence of a urethane-forming catalyst and a blowing agent, polyurethane foam can be produced.

The polyol component is not particularly limited, as long as it is a polyol component for producing flexible (described later) polyurethane foam, and a known polyol component can be used.

To be specific, the polyol component contains a compound having two or more hydroxyl groups in its molecule, and preferably, consists of the compound having two or more hydroxyl groups in its molecule.

The compound having two or more hydroxyl groups in its molecule is not particularly limited, and examples thereof include macropolyol with a number average molecular weight (Mn) of 200 to 10000, preferably 400 to 5000.

Examples of the macropolyol include polyetherpolyol, polyesterpolyol, polyetherpolyesterpolyol, and polyesterpolyurethane polyol, and preferably, polyetherpolyol is used.

Polyether polyol can be produced by, for example, subjecting alkyleneoxide to addition polymerization with water, alcohols, amines, or ammonia as an initiator.

Examples of the alcohols as the initiator include mono or poly (2 to 8 hydric) aliphatic alcohols such as the following: monohydric aliphatic alcohols such as methanol and ethanol; dihydric aliphatic alcohols such as ethylene glycol and propylene glycol; trihydric aliphatic alcohols such as glycerine and trimethylolpropane; tetrahydric aliphatic alcohols such as pentaerythritol; hexahydric aliphatic alcohols such as sorbitol; and octahydric aliphatic alcohols such as sucrose.

Examples of the amines as the initiator include mono or polyfunctional aliphatic amines such as the following: monofunctional aliphatic amines such as dimethylamine and diethylamine; difunctional aliphatic amines such as methylamine and ethylamine; trifunctional aliphatic amines such as monoethanolamine, diethanolamine, and triethanol amine; tetrafunctional aliphatic amines such as ethylene diamine; pentafunctional aliphatic amines such as diethylene triamine; or aromatic amines such as toluylenediamine.

For the initiator, preferably dihydric aliphatic alcohols and trihydric aliphatic alcohols are used, and more preferably, trihydric aliphatic alcohols is used.

Examples of the alkyleneoxide include ethyleneoxide, propyleneoxide, 1,2-, 1,3-, 1,4-and 2,3-butyleneoxide and a combination of two or more of these. Of these, preferably, propylene oxide and/or ethylene oxide is used. When these are used in combination, any addition by block polymerization and random polymerization can be suitably selected and used.

For polyetherpolyol, to be specific, for example, polyethylenepolyol, polypropylenepolyol, and polyethylene·polypropylene copolymer (random copolymer, block copolymer) are used.

The polyol component has a hydroxyl number (OH value) of, for example, 5mg KOH/g or more, preferably 50mg KOH/g or more, 100mg KOH/g or more, and for example, 500mg KOH/g or less, preferably 300mg KOH/g or less, more preferably 250mg KOH/g or less, and the average functional group of, for example, 1.5 or more, preferably 2.0 or more, and for example, 8.0 or less, preferably 4.0 or less.

The hydroxyl number of the polyol component is measured in accordance with the description of JIS K 1557-1 (2007), and the average functional group of the polyol component is calculated from the mixing formulation of the ingredients used.

The polyol components having a different number average molecular weight, initiator type, hydroxyl number, average functional group, alkyleneoxide type, or addition method can be used in combination at a suitable ratio in accordance with its purpose and use.

To be specific, for example, a polyol component having a number average molecular weight of 400 or more and 1000 or less can be used in combination with a polyol component having a number average molecular weight of more than 1000 and 5000 or less, preferably 2000 or less. The polyol component having a number average molecular weight of 1000 or less can be blended in an amount of, relative to their total, for example, 10 mass% or more, preferably 20 mass% or more, and for example, 50 mass% or less, preferably 40 mass% or less, and the polyol component having a number average molecular weight of more than 1000 can be blended in an amount of, for example, 50 mass% or more, preferably 60 mass% or more, and for example, 90 mass% or less, preferably 80 mass% or less.

A polyol component having a hydroxyl number of 5mg KOH/g or more and 200mg KOH/g or less can be used in combination with a polyol component having a hydroxyl number of more than 200 mg KOH/g and 500 mg KOH/g or less, and the polyol component having a hydroxyl number of 200 mgKOH/g or less is blended in an amount of, for example, 50 mass% or more, preferably 60 mass% or more, and for example, 90 mass% or less, preferably 80 mass% or less, and the polyol component having a hydroxyl number of more than 200 mgKOH/g is blended in an amount of, for example, 10 mass% or more, preferably 20 mass% or more, and for example, 50 mass% or less, preferably 40 mass% or less.

Examples of the urethane-forming catalyst include amines and an organometallic compound.

Examples of the amines include tertiary amines such as triethylamine, triethylenediamine, bis-(2-dimethylaminoethyl) ether, and N-methylmorphiline; quaternary ammonium salt such as tetraethyl hydroxyl ammonium; and imidazoles such as imidazole and 2-ethyl-4-methyl imidazole. These amines may be used singly or in a combination of two or more.

A commercially available product can be used for these amines, and examples thereof include KAOLIZER No. 31 (manufactured by Kao Corporation), KAOLIZER No. 120 (manufactured by Kao Corporation), KAOLIZER No. 12 (manufactured by Kao Corporation), KAOLIZER No. 25 (manufactured by Kao Corporation), DABCO 33 LV (33 mass% diethylene glycol solution of triethylenediamine, manufactured by Air Products and Chemicals, Inc.), Niax A-1 (manufactured by Momentive Performance Materials Inc. (hereinafter referred to as "manufactured by Momentive")), and TOYOCAT-NCE (manufactured by Tosoh Corporation).

Examples of the organometallic compound include organic tin compounds such as tin acetate, tin octylate, tin oleate, tin laurate, dibutyltindiacetate, dimethyltindilaurate, dibutyltindilaurate, dibutyltindimercaptide, dibutyltinmaleate, dibutyltindineodecanoate, dioctyltindimercaptide, dioctyltindilaurate, and dibutyltindichloride; organic lead compounds such as lead octanoate and lead naphthenate; organic nickel compounds such as nickel naphthenate; organic cobalt compounds such as cobalt naphthenate; organic copper compounds such as copper octenate; organic bismuth compounds such as bismuth octylate and bismuth neodecanoate. These organometallic compounds may be used singly or in a combination of two or more.

A commercially available product can be used for these organometallic compounds, and for example, NEOSTANN U-100 (organotin compound, manufactured by Nitto Kasei Co., Ltd.), Formate TK-1 (organotin compound, manufactured by Mitsui Chemicals, Inc.), Formrez UL-28 (organotin compound, manufactured by Momentive), and Stanoct (organotin compound, manufactured by Mitsubishi Chemical Corporation.) are used.

These urethane-forming catalysts (amines and organometallic compounds) may be used singly or in a combination of two or more, and preferably, amines and organometallic compounds are used in combination.

The mixing ratio of the urethane-forming catalyst (based on 100% active component amount) relative to 100 parts by mass of the polyol component is, for example, 0.1 parts by mass or more, preferably 0.3 parts by mass or more, more preferably 1.0 part by mass or more, and for example, 5 parts by mass or less, preferably 3 parts by mass or less.

When the mixing ratio of the urethane-forming catalyst is in the above-described range, non-yellowing properties of the produced polyurethane foam can be improved.

When the amines and organometallic compounds are used in combination for the urethane-forming catalyst, the amines and organometallic compounds are mixed, for example, (mixing ratio of the amines/organometallic compounds, based on 100% active component amount) in an amount of, for example, 0.5 or more, preferably 0.8 or more, and for example, 5 or less, preferably 3.5 or less.

Examples of the blowing agent include, without particular limitation, a known blowing agent, and preferably, water is used.

For the blowing agent, water and a physical blowing agent (for example, halogenated hydrocarbons (for example, methylenechloride), hydrocarbons (for example, cyclopentane), carbon dioxide, liquefied carbon dioxide) can be used in combination at a suitable ratio. Examples of the physical blowing agent include, in view of reducing environmental burden, preferably, carbon dioxide and liquefied carbon dioxide.

These physical blowing agents may be used singly or in a combination of two or more.

The mixing ratio of the blowing agent relative to 100 parts by mass of the polyol component is, for example, 0.5 parts by mass or more, preferably 1 part by mass or more, and for example, 10 parts by mass or less, preferably 7 parts by mass or less.

When the blowing agent content is in the above-described range, excellent foaming properties can be achieved.

To produce the polyurethane foam of the present invention, first, the above-described polyol component is blended with the above-described urethane-forming catalyst and the above-described blowing agent at the above-described mixing ratio to prepare a premix (resin premix).

In the preparation of the premix, as necessary, additives such as a foam stabilizer and a stabilizer can be added, and preferably, the premix is prepared from the above-described polyol component, the above-described urethane-forming catalyst, the above-described blowing agent, the foam stabilizer and the stabilizer.

Examples of the foam stabilizer include, without particular limitation, a known foam stabilizer, and for example, silicone foam stabilizer is used.

A commercially available product can be used for these foam stabilizers, and for example, DC-6070, DC-2525 (manufactured by Air Products and Chemicals, Inc., trade name), SZ-1966, SRX-274C, SF-2969, SF-2961, SF-2962, SZ-1325, SZ-1328 (manufactured by DOW CORNING TORAY, trade name), L-5309, L-3601, L-5307, L-3600, L-5366, Y-10366 (manufactured by Momentive, trade name), B-8002, B-8545, B-8715 LF2 (manufactured by Evonic Corporation, trade name) are used.

These foam stabilizers may be used singly or in a combination of two or more.

The mixing ratio of the foam stabilizer relative to 100 parts by mass of the polyol component is, for example, 0.1 parts by mass or more, preferably 0.5 parts by mass or more, and for example, 10 parts by mass or less, preferably 5 parts by mass or less.

Examples of the stabilizer include antioxidant, ultraviolet ray absorber, heat stabilizer, and light stabilizer, and preferably, antioxidant and light stabilizer are used.

Examples of the antioxidant include hindered phenol antioxidant (for example, 4-methyl-2,6-di-tert-butylphenol (BHT), triethylene glycol-bis[3-(3-t-butyl-5-methyl-4-hydroxyphenyl) propionate], pentaerythritoltetrakis[3-(3,5-di-t-butyl-4-hydroxyphenyl) propionate]), and other antioxidants (for example, antioxidants excluding hindered phenol antioxidants including phosphorus antioxidants such as bis(2,4-dit-butylphenyl) pentaerythritoldiphosphite, tridecylphosphite, tris (2-ethylhexyl) phosphite, and thiophene antioxidants such as 2,5-thiophenediylbis(5-t-butyl-1,3-benzoxazole).

Of these antioxidants, preferably, phosphorus antioxidants are used, and more preferably, tris (2-ethylhexyl) phosphite is used. A commercially available product can be used for the tris (2-ethylhexyl) phosphite include, and for example, JP-308E (manufactured by Johoku Chemical Co. Ltd., trade name) is used.

These antioxidants may be used singly or in a combination of two or more.

Examples of the ultraviolet ray absorber include benzophenone, benzotriazole, triazine, and cyanoacrylate ultraviolet ray absorbers.

These ultraviolet ray absorbers may be used singly or in a combination of two or more.

Examples of the heat stabilizer include a compound containing a sulfone amide group.

Examples of the compound containing a sulfone amide group include aromatic sulfone amides and aliphatic sulfone amides, and preferably, o-toluenesulfonamide is used.

These heat stabilizers may be used singly or in a combination of two or more.

Examples of the light stabilizer include hindered amine light stabilizers, and blended light stabilizers, and preferably, the hindered amine light stabilizer is used. Examples of the hindered amine light stabilizer include ADK STAB LA 62, ADK STAB LA 67 (manufactured by Adeka Argus Chemical Co., Ltd., trade name), TINUVIN 765, TINUVIN 144, TINUVIN 770, TINUVIN 622 (manufactured by BASF Japan, trade name).

These light stabilizers may be used singly or in a combination of two or more.

The mixing ratio of the stabilizer relative to 100 parts by mass of the polyol component is, for example, 0.1 parts by mass or more, preferably 0.5 parts by mass or more, and for example, 10 parts by mass or less, preferably 5 parts by mass or less.

To the premix, other than the above-described additives, furthermore, as necessary, a known other additive such as a cross-linking agent, cell opening agent, pigment (color pigment), dye, curing accelerator, flatting agent, tackifier, and silane coupling agent can be added at a suitable ratio to the extent that would not damage the excellent effects of the present invention.

Furthermore, as known other additives, for example, chain extenders, antifoaming agent, plasticizer, anti-blocking agent, release agent, lubricant, filler, hydrolysis inhibitor can be added at a suitable ratio to the extent that would not damage the excellent effects of the present invention.

Thus, the thus obtained premix is mixed with the polyisocyanate component to allow them to react, and foam by a known foaming method such as, for example, slab method, mold method, spray method, thereby producing the polyurethane foam of the present invention.

The reaction conditions (for example, reaction temperature) for the premix and the polyisocyanate component are suitably set in accordance with purpose and use.

The reaction time (cream time (CT)) for the premix and the polyisocyanate component are measured in accordance with Examples to be described later, and for example, 40 seconds or more, and for example, 200 seconds or less, preferably 100 seconds or less, more preferably 60 seconds or less, further preferably 50 seconds or less.

When the reaction time (cream time (CT)) for the premix and the polyisocyanate component are in the above-described range, workability can be improved.

The polyisocyanate component is blended in an amount of, for example, as the isocyanate index (the ratio of the isocyanate group relative to 100 of the total amount of the active hydrogen such as hydroxyl group in the polyol component, and water as the blowing agent), for example, 60 or more, preferably 70 or more, and for example, 500 or less, preferably 130 or less.

In this manner, the polyurethane foam of the present invention as a reaction product of the polyisocyanate component and the polyol component is produced.

In the thus produced polyurethane foam of the present invention, the polyisocyanate component is a reaction product of aliphatic polyisocyanate and monohydric alcohol, contains the aliphatic polyisocyanate derivative containing symmetric-asymmetric isocyanurate group and allophanate group, and the allophanate group content relative to the total amount of the polyisocyanate component is 10 mol or more and 80 mol or less, and furthermore, the uretdione group content relative to the total amount of the polyisocyanate component is less than 10 mol%. Therefore, the polyurethane foam of the present invention has excellent air permeability and laundry durability.

The polyurethane foam of the present invention has an air permeability (measurement in accordance with Examples to be described later) of, for example, 100 cc/cm$^2$/sec or more, preferably 150 cc/cm$^2$/sec or more, more preferably 200 cc/cm$^2$/sec or more, and for example, 500 cc/cm$^2$/sec or less.

The polyurethane foam of the present invention has a linear expansion coefficient (laundry durability, measurement in accordance with Examples to be described later) of, for example, 10% or less, preferably 8% or less, more preferably 5% or less, and for example, 0.1% or more.

The polyurethane foam of the present invention is flexible polyurethane foam.

"Flexible" can be defined as follows: the polyurethane foam has a hardness (25%CLD, measurement in accordance with Examples to be described later) of, for example, 40.0N/100 cm$^2$ or less, preferably 30.0N/100 cm$^2$ or less, more preferably 20.0N/100 cm$^2$ or less, further preferably 15.0N/100 cm$^2$ or less, further preferably 10.0N/100 cm$^2$ or less, further preferably 6.0N/100 cm$^2$ or less, further preferably 5.0N/100 cm$^2$ or less.

The polyurethane foam of the present invention has excellent colour fastness. In other words, the polyurethane foam of the present invention is non-yellowing foam.

"non-yellowing" can be defined as follows: the polyurethane foam has a light resistance $\Delta$b of, for example, 15.0 or less, preferably 12.0 or less.

The polyurethane foam of the present invention has a density (measured in accordance with Examples to be described later) of, for example, 35.0 kg/m$^3$ or more, preferably 38.0 kg/m$^3$ or more, and for example, 45.0 kg/m$^3$ or less, preferably 43.0 kg/m$^3$ or less, more preferably 42.0 kg/m$^3$ or less.

The polyurethane foam of the present invention has an elongation at break of, for example, 60% or more, preferably 65% or more, more preferably 70% or more, further preferably 75% or more, particularly preferably 85% or more, and for example, 90% or less.

Therefore, the produced polyurethane foam can be effectively used as elastic materials for body pressure distribution material, form retainable material, sound absorbing material, shock absorbing material, vibration absorbing material, and optical material in the field of automobiles, furniture, bedding, electronic material, medical, apparel, and sanitary material.

To be more specific, the polyurethane foam can be used for, for example, seat, head rest, bedding such as pillow and mattress, sofa, cushioning material for caregiving, leisure sheet, supporter, form retainer for wigs, filter, microphone cover, earphone cover, headphone cover, flooring for cushion floor, makeup puff, medical material, rolls for application, OA roll, electronic members (for example, tablet computer, smartphone), scouring pad, sanitary napkins, and diapers.

In particular, the polyurethane foam has soft touch and excellent non-yellowing properties, and therefore preferably, it is used for pressure-resistant cushioning material for apparel and shoes, and to be specific, can be used for shoulder pads, knee pads, elbow pads, bathing suit pads, tongue portion and insole for shoes, medical materials, and apparel materials, and particularly suitable for brassiere pads and brassiere cups as the molded article for apparel materials.

With the apparel material including the polyurethane foam of the present invention, and brassiere pad and brassiere cup of the molded article of the apparel material, air permeability and laundry durability can be improved.

Examples

Next, the present invention is described based on Examples and Comparative Examples. However, the present invention is not limited to Examples below. The "parts" and "%" are based on mass unless otherwise specified. The specific numerical values of mixing ratio (content ratio), physical property value, and parameter used in the following can be replaced with upper limit values (numerical values defined with "or less" or "below") or lower limit values (numerical values defined with "or more" or "above") of corresponding numerical values in mixing ratio (content ratio), physical property value, and parameter described in "**DESCRIPTION OF EMBODIMENTS**" above.

The measurement methods used in Preparation Examples, Synthesis Examples, Examples, and Comparative Examples are described below.

1. Measurement method

<Isocyanate group concentration (unit: mass%), isocyanate group conversion rate (unit: mass%)>

The isocyanate group concentration (isocyanate group content) was measured in conformity with toluene/dibutylamine-hydrochloric acid method in JIS K-1603-1(2007) using a potential difference titrator (manufactured by Kyoto Electronics Manufacturing Co., Ltd., model number: AT-510), and the conversion rate of the isocyanate group in the measurement sample was calculated based on the formula below.

$$\text{Isocyanate group conversion rate} = 100 - (\text{isocyanate group concentration of reaction mixture liquid after completion of reaction/isocyanate group concentration of reaction solution before reaction} \times 100)$$

<Isocyanate monomer concentration (unit: mass%)>

Pentamethylene diisocyanate produced in the same manner as in Example 1 of **DESCRIPTION** of WO 2012/121291 or commercially available hexamethylenediisocyanate was used as a standard sample, and labeled with dibenzylamine. The unreacted pentamethylene diisocyanate monomer or hexamethylenediisocyanate monomer concentration was calculated based on the calibration curve made from the area value of a chromatogram obtained under HPLC analysis conditions below.

Device; Prominence (manufactured by Shimadzu Corporation)
Pump LC-20AT
Degasser DGU-20A3
Autosampler SIL-20A

Column thermostatic chamber COT-20A
Detector SPD-20A
Column; SHISEIDO SILICA SG-120
Column temperature; 40°C
Eluent; n-hexane/methanol/1,2-dichloroethane = 90/5/5(volume ratio)
Flow rate; 0.2mL/min
Detection method; UV 225 nm

<Viscosity (unit: mPa·s)>

The viscosity of the measurement sample was measured at 25°C using type E viscometer TV-30 (rotor angle: 1°34', rotor diameter: 24 cm) manufactured by TOKI Sangyo Co., Ltd. in accordance with Corn and plate method of JIS K5600-2-3 (2014). The number of revolution of the corn and plate at the time of measurement was changed suitably in the range of 100rpm to 2.5rpm in accordance with the increase in the viscosity.

<Calculation of mole ratio of allophanate group to symmetric-asymmetric isocyanurate group by $^1$H-NMR>

$^1$H-NMR measurement was carried out with the device and conditions below to calculate the allophanate group content (mole ratio of allophanate group/symmetric-asymmetric isocyanurate group) relative to 1 mol of the symmetric-asymmetric isocyanurate group in the aliphatic polyisocyanate derivative based on the formula below. Tetramethylsilane (0 ppm) in $D^6$-DMSO solvent was used as the base of chemical shift ppm.
Device; JNM-AL400 (manufactured by JEOL)
Conditions; measurement frequency:400MHz, solvent: $D^6$-DMSO, solute concentration:5 mass% Assigned peak of protons of allophanate group (NH group in allophanate group) ($^1$H):8.3 to 8.7 ppm
Assigned peak of protons of symmetric-asymmetric isocyanurate group (methylene group ($CH_2$ group) directly bonded to symmetric-asymmetric isocyanurate group) (6H):3.8 ppm

$$\text{Mole ratio of allophanate group to symmetric-asymmetric isocyanurate group} =$$

$$\text{integrated value of assigned peak of protons of allophanate group /(integrated value of assigned}$$

$$\text{peak of protons of symmetric-asymmetric isocyanurate group/6)}$$

<Calculation of mole ratio of uretdione group to symmetric-asymmetric isocyanurate group by $^{13}$C-NMR>

$^{13}$C-NMR measurement was carried out with the device and conditions below to calculate the uretdione group content (mole ratio of uretdione group/symmetric-asymmetric isocyanurate group) relative to 1 mol of the symmetric-asymmetric isocyanurate group in the aliphatic polyisocyanate derivative based on the formula below. Tetramethylsilane (0 ppm) in $CDCL_3$ solvent was used as the base of chemical shift ppm.
Device; JNM-AL400 (manufactured by JEOL)
Conditions; measurement frequency: 100MHz, solvent: $CDCL_3$, solute concentration:50 mass% Assigned peak of carbon of uretdione group (CO group in uretdione group)(2H): 157.8 ppm Assigned peak of carbon of symmetric-asymmetric isocyanurate group (CO group in symmetric-asymmetric isocyanurate group)(3H):149.1 ppm

$$\text{Mole ratio of uretdione group/symmetric-asymmetric isocyanurate group} = \text{(integrated}$$

$$\text{value of assigned peak of carbon of uretdione group/2)/(integrated value of assigned peak of}$$

$$\text{carbon of symmetric-asymmetric isocyanurate group/3)}$$

<Symmetric·asymmetric isocyanurate group, allophanate group, and uretdione group contents (mass%)>

The mole ratio of the allophanate group to the symmetric-asymmetric isocyanurate group measured in the above-described $^1$H-NMR is assumed to be as follows. The mole ratio of the uretdione group to the symmetric-asymmetric isocyanurate group measured in the above-described $^{13}$C-NMR is assumed to be as follows.

Symmetric-asymmetric isocyanurate group: allophanate group = 100: $R_A$
Symmetric-asymmetric isocyanurate group: uretdione group = 100: $R_U$

at this time, symmetric-asymmetric isocyanurate group, allophanate group, and uretdione group contents in the aliphatic polyisocyanate derivative are calculated based on the following formula.

When two or more types of the aliphatic polyisocyanate derivatives are blended, the symmetric-asymmetric isocyanurate group, allophanate group, and uretdione group contents in the mixture are calculated from the blending ratio of these aliphatic polyisocyanate derivatives, and the symmetric-asymmetric isocyanurate group, allophanate group, and uretdione group contents in the respective derivatives.

$$\text{Symmetric-asymmetric isocyanurate group content } (\%) = 100 \times 100/(100+R_A+R_U)$$

$$\text{Allophanate group content } (\%) = R_A \times 100/(100+R_A+R_U)$$

$$\text{Uretdione group content } (\%) = R_U \times 100/(100+R_A+R_U)$$

<Allophanate bimolecular product content relative to the polyisocyanate component (allophanate bimolecular product concentration (unit: mass%))>

The isocyanate produced in Preparation Examples was dissolved in 10ml of tetrahydrofuran, and subjected to gel permeation chromatogram (GPC) with the device and conditions below.

Then, based on the chromatogram obtained, the bimolecular aliphatic polyisocyanate molecular weight was added to the isobutanol molecular weight, and the added value was regarded as the allophanate bimolecular product molecular weight, and the molecular weight peak ratio was regarded as the allophanate bimolecular product ratio.

To be specific, the allophanate bimolecular product content of pentamethylene diisocyanate is calculated as the ratio of the peak area having a peak top between 370 to 390 of polyethylene oxide-based molecular weight relative to a total peak area (bimolecular product area percentage).

The allophanate bimolecular product content of hexamethylene diisocyanate is calculated as the ratio of the ratio of the peak area having a peak top between 400 to 420 of polyethylene oxide-based molecular weight relative to a total peak area (bimolecular product area percentage).

When a plurality of types of the isocyanates produced in Preparation Example are used, or when the isocyanate and other polyisocyanate monomer and/or derivative thereof are used in combination, the bimolecular product area percentage is measured for the respective components used, and then, the bimolecular product area percentage is multiplied by the ratio of the components charged, and then they are added to calculate the bimolecular product area percentage in the entire polyisocyanate component.

Device: HLC-8220GPC (manufactured by Tosoh Corporation)
Column: TSKgelG 1000HXL, TSKgelG 2000HXL, and TSKgelG 3000HXL (manufactured by Tosoh Corporation) connected in series
Detector: refractive index detector
Measurement conditions
Amount injected: 100$\mu$L
Eluent: tetrahydrofuran
Flow rate: 0.8mL/min
Temperature: 40°C
Calibration curve: standard polyethyleneoxide (manufactured by Tosoh Corporation, trade name: TSK standard polyethyleneoxide) in the range of 106 to 22450

2. Ingredient

(1) Polyisocyanate component (a)

Preparation Example 1 (isocyanate (a-1)(PDI derivative))

A four-neck flask equipped with a thermometer, stirrer, reflux pipe, and nitrogen inlet tube was charged with 500 parts by mass of pentamethylene diisocyanate produced in the same manner as in Example 1 of description of WO2012/121291, 0.5 parts by mass of isobutylalcohol, 0.3 parts by mass of 2,6-di(tert-butyl)-4-methylphenol, and 0.3 parts by mass of tris(tridecyl)phosphite, and the mixture was allowed to react at 80°C for 2 hours.

Then, 0.05 parts by mass of N-(2-hydroxypropyl)-N,N,N-trimethylammonium-2-ethylhexanoate as the isocyanurate-forming catalyst was blended. The isocyanate group concentration was measured, and reaction was continued until the concentration reached 48.9 mass% (that is, conversion rate 10 mass%). 0.12 parts by mass of o-toluenesulfonamide was added after 50 minutes when a predetermined conversion rate (conversion rate 10 mass%) was reached. The obtained reaction mixture liquid was allowed to pass through a thin film distillation device (temperature: 150°C, degree of vacuum: 0.093kPa) to remove the unreacted pentamethylene diisocyanate monomer, and furthermore, 0.02 parts by mass of o-toluenesulfonamide and 0.003 parts by mass of benzoyl chloride were added relative to 100 parts by mass of the produced residue, thereby producing isocyanate (a-1).

The isocyanate (a-1) had an isocyanate monomer concentration of 0.5 mass%, an isocyanate group concentration of 24.6 mass%, and a viscosity at 25°C of 2000 mPa·s.

The mole ratio of the allophanate group to the symmetric-asymmetric isocyanurate group measured by $^1$H-NMR was, allophanate group/symmetric-asymmetric isocyanurate group = 7.4/100.

The mole ratio of the uretdione group to the symmetric-asymmetric isocyanurate group measured by $^{13}$C-NMR was, uretdione group/symmetric-asymmetric isocyanurate group = 1/100.

The ratio of the allophanate bimolecular product relative to the aliphatic polyisocyanate derivative by the GPC measurement was 0 mass%.

Preparation Example 2 (isocyanate (a-2)(PDI derivative))

A four-neck flask equipped with a thermometer, stirrer, reflux pipe, and nitrogen inlet tube was charged with 500 parts by mass of pentamethylene diisocyanate produced in the same manner as in Example 1 of description of WO2012/121291, 9.6 parts by mass of isobutylalcohol, 0.3 parts by mass of 2,6-di(tert-butyl)-4-methylphenol, and 0.3 parts by mass of tris(tridecyl)phosphite, and the mixture was allowed to react at 80°C for 2 hours.

Then, 0.05 parts by mass of N-(2-hydroxypropyl)-N,N,N-trimethylammonium-2-ethylhexanoate as the isocyanurate-forming catalyst was blended. The isocyanate group concentration was measured, and reaction was continued until the concentration reached 47.1 mass% (that is, conversion rate 10 mass%). 0.12 parts by mass of o-toluenesulfonamide was added after 20 minutes when a predetermined conversion rate (conversion rate 10 mass%) was reached. The obtained reaction mixture liquid was allowed to pass through a thin film distillation device (temperature: 150°C, degree of vacuum: 0.093kPa) to remove the unreacted pentamethylene diisocyanate monomer, and furthermore, 0.02 parts by mass of o-toluenesulfonamide and 0.003 parts by mass of benzoyl chloride were added relative to 100 parts by mass of the produced residue, thereby producing isocyanate (a-2).

The isocyanate (a-2) had an isocyanate monomer concentration of 0.6 mass%, an isocyanate group concentration of 23.5 mass%, and a viscosity at 25°C of 900 mPa·s.

The mole ratio of the allophanate group to the symmetric-asymmetric isocyanurate group measured by $^1$H-NMR was, allophanate group/symmetric-asymmetric isocyanurate group = 54.0/100.

The ratio of the allophanate bimolecular product relative to the aliphatic polyisocyanate derivative by the GPC measurement was 28 mass%.

The mole ratio of the uretdione group to the symmetric-asymmetric isocyanurate group measured by $^{13}$C-NMR was, uretdione group/symmetric-asymmetric isocyanurate group = 0/100.

Preparation Example 3 (isocyanate (a-3)(PDI derivative))

A four-neck flask equipped with a thermometer, stirrer, reflux pipe, and nitrogen inlet tube was charged with 500 parts by mass of pentamethylene diisocyanate produced in the same manner as in Example 1 of description of WO2012/121291, 6.9 parts by mass of isobutylalcohol, 0.3 parts by mass of 2,6-di(tert-butyl)-4-methylphenol, and 0.3 parts by mass of tris(tridecyl)phosphite, and the mixture was allowed to react at 80°C for 2 hours.

Then, 0.05 parts by mass of N-(2-hydroxypropyl)-N,N,N-trimethylammonium-2-ethylhexanoate as the isocyanurate-forming catalyst was blended. The isocyanate group concentration was measured, and reaction was continued until the concentration reached 48.3 mass% (that is, conversion rate 10 mass%). 0.12 parts by mass of o-toluenesulfonamide was added after 20 minutes when a predetermined conversion rate (conversion rate 10 mass%) was reached. The obtained reaction mixture liquid was allowed to pass through a thin film distillation device (temperature: 150°C, degree of vacuum: 0.093kPa) to remove the unreacted pentamethylene diisocyanate monomer, and furthermore, 0.02 parts by mass of o-toluenesulfonamide and 0.003 parts by mass of benzoyl chloride were added relative to 100 parts by mass of the produced residue, thereby producing isocyanate (a-3).

The isocyanate (a-3) had an isocyanate monomer concentration of 0.4 mass%, an isocyanate group concentration of 23.7 mass%, and a viscosity at 25°C of 950 mPa·s.

The mole ratio of the allophanate group to the symmetric-asymmetric isocyanurate group measured by $^1$H-NMR was, allophanate group/symmetric-asymmetric isocyanurate group = 33.0/100.

The mole ratio of the uretdione group to the symmetric-asymmetric isocyanurate group measured by [13]H-NMR was, uretdione group/symmetric-asymmetric isocyanurate group = 0.5/100.

The ratio of the allophanate bimolecular product relative to the aliphatic polyisocyanate derivative by the GPC measurement was 21 mass%.

Preparation Example 4 (isocyanate (a-4)(PDI derivative))

A reactor equipped with a thermometer, stirrer, nitrogen inlet tube, and condenser tube was charged with 500 parts by mass of pentamethylene diisocyanate produced in the same manner as in Example 1 of description of WO2012/121291 in a nitrogen atmosphere, and nitrogen was introduced to the liquid phase (reaction solution) of pentamethylene diisocyanate for 1 hour. The reaction solution had a dissolved oxygen concentration of 1 mass ppm after introducing nitrogen for 1 hour. Thereafter, the temperature of the reaction solution was increased to 150°C. Then, the reaction was continued at the same temperature for 10 hours, and thereafter the reaction was terminated. Then, the reaction mixture liquid of the produced pentamethylene diisocyanate derivative was allowed to pass through a thin film distillation device (temperature: 120°C, degree of vacuum: 93.3Pa) to remove the unreacted pentamethylene diisocyanate monomer, thereby producing isocyanate (a-4).

The produced isocyanate (a-4) had an isocyanate group concentration of 26.5 mass%, a viscosity at 25°C of 24 mPa·s, and an isocyanate monomer concentration of 0.5 mass%.

The mole ratio of the allophanate group to the symmetric-asymmetric isocyanurate group measured by $^1$H-NMR was, allophanate group/symmetric-asymmetric isocyanurate group = 0/0.

The mole ratio of the uretdione group to the symmetric-asymmetric isocyanurate group measured by [13]H-NMR was, uretdione group/symmetric-asymmetric isocyanurate group = 100/0.

The ratio of the allophanate bimolecular product relative to the aliphatic polyisocyanate derivative by the GPC measurement was 0 mass%.

Preparation Example 5 (isocyanate (a-5)(PDI derivative))

A reactor equipped with a thermometer, stirrer, nitrogen inlet tube, and condenser tube was charged with 500 parts by mass of pentamethylene diisocyanate produced in the same manner as in Example 1 of description of WO2012/121291, 24 parts by mass of isobutanol, 0.3 parts by mass of 2,6-di(t-butyl)-4-methylphenol, and 0.3 parts by mass of tris(tridecyl)phosphite in a nitrogen atmosphere, and the mixture was subjected to urethane-forming reaction at 85°C for 3 hours.

Then, 0.02 parts by mass of tris (2-ethylhexanoic acid) bismuth was added as the allophanate-formation catalyst, and the reaction was continued until the isocyanate group concentration reached a calculated value (46.8 mass%). Thereafter, 0.02 parts by mass of o-toluenesulfonamide was added.

Thereafter, the obtained reaction solution was allowed to pass through a thin film distillation device (degree of vacuum 0.093KPa, temperature 150°C) to remove the unreacted pentamethylene diisocyanate, and furthermore, 0.02 parts by mass of o-toluenesulfonamide was added relative to 100 parts by mass of the produced residue, thereby producing isocyanate (a-5).

The produced isocyanate (a-5) had an isocyanate group concentration of 20.4 mass%, a viscosity at 25°C of 200 mPa·s, and an isocyanate monomer concentration of 0.2 mass%.

The mole ratio of the allophanate group to the symmetric-asymmetric isocyanurate group measured by $^1$H-NMR was, allophanate group/symmetric-asymmetric isocyanurate group = 100/3.

The mole ratio of the uretdione group to the symmetric-asymmetric isocyanurate group measured by $^{13}$C-NMR was, uretdione group/symmetric-asymmetric isocyanurate group = 0/3.

The ratio of the allophanate bimolecular product relative to the aliphatic polyisocyanate derivative by the GPC measurement was 67 mass%.

Preparation Example 6 (isocyanate (a-6)(PDI derivative))

A reactor equipped with a thermometer, stirrer, nitrogen inlet tube, and condenser tube was charged with 500 parts by mass of pentamethylene diisocyanate produced in the same manner as in Example 1 of description of WO2012/121291, 14.6 parts by mass of 1,3-butanediol, 0.3 parts by mass of 2,6-di(t-butyl)-4-methylphenol, and 0.3 parts by mass of tris(tridecyl)phosphite in a nitrogen atmosphere, and the mixture was subjected to urethane-forming reaction at 85°C for 3 hours.

Then, 0.02 parts by mass of tris (2-ethylhexanoic acid) bismuth was added as the allophanate-formation catalyst, and the reaction was continued until the isocyanate group concentration reached a calculated value (47.6 mass%). Thereafter, 0.02 parts by mass of o-toluenesulfonamide was added.

Thereafter, the obtained reaction solution was allowed to pass through a thin film distillation device (degree of vacuum 0.093KPa, temperature 150°C) to remove the unreacted pentamethylene diisocyanate, and furthermore, 0.02 parts by mass of o-toluenesulfonamide was added relative to 100 parts by mass of the produced residue, thereby producing isocyanate (a-6).

The produced isocyanate (a-6) had an isocyanate group concentration of 22.4 mass%, a viscosity at 25°C of 360 mPa·s, and an isocyanate monomer concentration of 0.2 mass%.

The mole ratio of the allophanate group to the symmetric-asymmetric isocyanurate group measured by $^1$H-NMR was, allophanate group/symmetric-asymmetric isocyanurate group = 100/3.

The mole ratio of the uretdione group to the symmetric-asymmetric isocyanurate group measured by $^{13}$C-NMR was, uretdione group/symmetric-asymmetric isocyanurate group = 0/3.

The ratio of the allophanate bimolecular product relative to the aliphatic polyisocyanate derivative by the GPC measurement was 0 mass%.

Preparation Example 7 (isocyanate (a-7)(PDI derivative))

A four-neck flask equipped with a thermometer, stirrer, reflux tube, and nitrogen inlet tube was charged with 500 parts by mass of pentamethylene diisocyanate produced in the same manner as in Example 1 of description of WO2012/121291, 4.2 parts by mass of 1,3-butanediol, 0.3 parts by mass of 2,6-di(tert-butyl)-4-methylphenol, and 0.3 parts by mass of tris(tridecyl)phosphite, and the mixture was allowed to react at 80°C for 2 hours.

Then, 0.05 parts by mass of N-(2-hydroxypropyl)-N,N,N-trimethylammonium-2-ethylhexanoate as the isocyanurate-forming catalyst was blended. The isocyanate group concentration was measured, and the reaction was continued until the concentration reached 48.6 mass% (that is, conversion rate 10 mass%). 0.12 parts by mass of o-toluenesulfonamide was added after 20 minutes when a predetermined conversion rate (conversion rate 10 mass%) was reached. The obtained reaction mixture liquid was allowed to pass through a thin film distillation device (temperature: 150°C, degree of vacuum: 0.093kPa) to remove the unreacted pentamethylene diisocyanate monomer, and furthermore, 0.02 parts by mass of o-toluenesulfonamide and 0.003 parts by mass of benzoyl chloride were added relative to 100 parts by mass of the produced residue, thereby producing isocyanate (a-7).

The isocyanate (a-7) had an isocyanate monomer concentration of 0.3 mass%, an isocyanate group concentration of 23.6 mass%, and a viscosity at 25°C of 2200 mPa·s.

The mole ratio of the allophanate group to the symmetric-asymmetric isocyanurate group measured by $^1$H-NMR was, allophanate group/symmetric-asymmetric isocyanurate group = 33.0/100.

The mole ratio of the uretdione group to the symmetric-asymmetric isocyanurate group measured by $^{13}$C-NMR was, uretdione group/symmetric-asymmetric isocyanurate group = 1/100.

The ratio of the allophanate bimolecular product relative to the aliphatic polyisocyanate derivative by the GPC measurement was 0 mass%.

Preparation Example 8 (isocyanate (a-8)(PDI derivative))

A four-neck flask equipped with a thermometer, stirrer, reflux tube, and nitrogen inlet tube was charged with 500 parts by mass of pentamethylene diisocyanate produced in the same manner as in Example 1 of description of WO2012/121291, 1.0 parts by mass of 1,3-butanediol, 0.3 parts by mass of 2,6-di(tert-butyl)-4-methylphenol, and 0.3 parts by mass of tris(tridecyl)phosphite, and the mixture was allowed to react at 80°C for 2 hours.

Then, 0.05 parts by mass of N-(2-hydroxypropyl)-N,N,N-trimethylammonium-2-ethylhexanoate as the isocyanurate-forming catalyst was blended. The isocyanate group concentration was measured, and reaction was continued until the concentration reached 48.9 mass% (that is, conversion rate 10 mass%). 0.12 parts by mass of o-toluenesulfonamide was added after 20 minutes when a predetermined conversion rate (conversion rate 10 mass%) was reached. The obtained reaction mixture liquid was allowed to pass through a thin film distillation device (temperature: 150°C, degree of vacuum: 0.093kPa) to remove the unreacted pentamethylene diisocyanate monomer, and furthermore, 0.02 parts by mass of o-toluenesulfonamide and 0.003 parts by mass of benzoyl chloride were added relative to 100 parts by mass of the produced residue, thereby producing isocyanate (a-8).

The isocyanate (a-8) had an isocyanate monomer concentration of 0.3 mass%, an isocyanate group concentration of 23.4 mass%, and a viscosity at 25°C of 1480 mPa·s.

The mole ratio of the allophanate group to the symmetric-asymmetric isocyanurate group measured by $^1$H-NMR was, allophanate group/symmetric-asymmetric isocyanurate group = 6/100.

The mole ratio of the uretdione group to the symmetric-asymmetric isocyanurate group measured by $^{13}$C-NMR was, uretdione group/symmetric-asymmetric isocyanurate group = 1/100.

The ratio of the allophanate bimolecular product relative to the aliphatic polyisocyanate derivative by the GPC measurement was 0 mass%.

Preparation Example 9 (isocyanate (a-9)(HDI derivative))

A four-neck flask equipped with a thermometer, stirrer, reflux pipe, and nitrogen inlet tube was charged with 500 parts by mass of hexamethylene diisocyanate (manufactured by Mitsui Chemicals, Inc. trade name: TAKENATE 700), 0.4 parts by mass of isobutyl alcohol, 0.3 parts by mass of 2,6-di(tert-butyl)-4-methylphenol, and 0.3 parts by mass of tris(tridecyl)phosphite, and the mixture was allowed to react at 80°C for 2 hours.

Then, 0.05 parts by mass of N-(2-hydroxypropyl)-N,N,N-trimethylammonium-2-ethylhexanoate as the isocyanurate-forming catalyst was blended. The isocyanate group concentration was measured, and reaction was continued until the concentration reached 44.8 mass% (that is, conversion rate 10 mass%). 0.12 parts by mass of o-toluenesulfonamide was added after 60 minutes when a predetermined conversion rate (conversion rate 10 mass%) was reached. The obtained reaction mixture liquid was allowed to pass through a thin film distillation device (temperature: 150°C, degree of vacuum: 0.093kPa) to remove the unreacted hexamethylene diisocyanate monomer, and furthermore, relative to 100 parts by mass of the produced residue, 0.02 parts by mass of o-toluenesulfonamide and 0.003 parts by mass of benzoyl chloride were added, thereby producing isocyanate (a-9).

The isocyanate (a-9) had an isocyanate monomer concentration of 0.5 mass%, an isocyanate group concentration of 23.0 mass%, and a viscosity at 25°C of 1460 mPa·s.

The mole ratio of the allophanate group to the symmetric-asymmetric isocyanurate group measured by $^1$H-NMR was, allophanate group/symmetric-asymmetric isocyanurate group = 8.1/100.

The mole ratio of the uretdione group to the symmetric-asymmetric isocyanurate group measured by [13]H-NMR was, uretdione group/symmetric-asymmetric isocyanurate group = 1/100.

The ratio of the allophanate bimolecular product relative to the aliphatic polyisocyanate derivative by the GPC measurement was 31 mass%.

Preparation Example 10 (isocyanate (a-10)(HDI derivative))

A four-neck flask equipped with a thermometer, stirrer, reflux tube, and nitrogen inlet tube was charged with 500 parts by mass of hexamethylene diisocyanate (manufactured by Mitsui Chemicals, Inc. trade name: TAKENATE 700), 6.3 parts by mass of isobutylalcohol, 0.3 parts by mass of 2,6-di(tert-butyl)-4-methylphenol, and 0.3 parts by mass of tris(tridecyl)phosphite, and the mixture was allowed to react at 80°C for 2 hours.

Then, 0.05 parts by mass of N-(2-hydroxypropyl)-N,N,N-trimethylammonium-2-ethylhexanoate as the isocyanurate-forming catalyst was blended. The isocyanate group concentration was measured, and the reaction was continued until the concentration reached 44.4 mass% (that is, conversion rate 10 mass%). 0.12 parts by mass of o-toluenesulfonamide was added after 60 minutes when a predetermined conversion rate (conversion rate 10 mass%) was reached. The obtained reaction mixture liquid was allowed to pass through a thin film distillation device (temperature: 150°C, degree of vacuum: 0.093kPa) to remove the unreacted hexamethylene diisocyanate monomer, and furthermore, relative to 100 parts by mass of the produced residue, 0.02 parts by mass of o-toluenesulfonamide and 0.003 parts by mass of benzoyl chloride were added, thereby producing isocyanate (a-10).

The isocyanate (a-10) had an isocyanate monomer concentration of 0.5 mass%, an isocyanate group concentration of 22.1 mass%, and a viscosity at 25°C of 550 mPa·s. The mole ratio of the allophanate group to the symmetric-asymmetric isocyanurate group measured by $^1$H-NMR was, allophanate group/symmetric-asymmetric isocyanurate group = 34.3/100.

The mole ratio of the uretdione group to the symmetric-asymmetric isocyanurate group measured by $^{13}$C-NMR was, uretdione group/symmetric-asymmetric isocyanurate group = 0/100.

The ratio of the allophanate bimolecular product relative to the aliphatic polyisocyanate derivative by the GPC measurement was 0 mass%.

Preparation Example 11 (isocyanate (a-11)(HDI derivative))

A four-neck flask equipped with a thermometer, stirrer, reflux tube, and nitrogen inlet tube was charged with 500 parts by mass of hexamethylene diisocyanate (manufactured by Mitsui Chemicals, Inc. trade name: TAKENATE 700), and nitrogen was introduced to the liquid phase (reaction solution) of hexamethylene diisocyanate for 1 hour. The reaction solution had a dissolved oxygen concentration of 1 mass ppm after introducing nitrogen for 1 hour. Thereafter, the temperature of the reaction solution was increased to 150°C. Then, the reaction was continued at the same temperature for 10 hours, and the reaction was terminated. The reaction mixture liquid of the produced hexamethylene diisocyanate derivative was passed through a thin film distillation device (temperature: 120°C, degree of vacuum: 93.3Pa) to remove the unreacted hexamethylene diisocyanate monomer, thereby producing isocyanate (a-11).

The produced isocyanate (a-11) had an isocyanate group concentration of 25.7 mass%, a viscosity at 25°C of 40 mPa·s, and an isocyanate monomer concentration of 0.5 mass%.

The mole ratio of the allophanate group to the symmetric-asymmetric isocyanurate group measured by $^1$H-NMR was, allophanate group/symmetric-asymmetric isocyanurate group = 0/0.

The mole ratio of the uretdione group to the symmetric-asymmetric isocyanurate group measured by $^{13}$C-NMR was, uretdione group/symmetric-asymmetric isocyanurate group = 100/0.

The ratio of the allophanate bimolecular product relative to the aliphatic polyisocyanate derivative by the GPC measurement was 0 mass%.

Preparation Example 12 (isocyanate (a-12)(HDI derivative))

A four-neck flask equipped with a thermometer, stirrer, reflux tube, and nitrogen inlet tube was charged with 500 parts by mass of hexamethylene diisocyanate (manufactured by Mitsui Chemicals, Inc. trade name: TAKENATE 700), 22 parts by mass of isobutanol, 0.3 parts by mass of 2,6-di(t-butyl)-4-methylphenol, and 0.3 parts by mass of tris(tridecyl)phosphite, and the mixture was subjected to urethane-forming reaction at 85°C for 3 hours.

Then, 0.02 parts by mass of tris (2-ethylhexanoic acid) bismuth was added as the allophanate-formation catalyst, and the reaction was continued until the isocyanate group concentration reached a calculated value (43.0 mass%). Thereafter, 0.02 parts by mass of o-toluenesulfonamide was added.

Thereafter, the obtained reaction solution was allowed to pass through a thin film distillation device (degree of vacuum 0.093KPa, temperature 150°C) to remove the unreacted hexamethylene diisocyanate, and furthermore, 0.02 parts by mass of o-toluenesulfonamide relative to 100 parts by mass of the produced residue was added, thereby producing isocyanate (a-12).

The produced isocyanate (a-12) had an isocyanate group concentration of 19.3 mass%, a viscosity at 25°C of 300 mPa·s, and an isocyanate monomer concentration of 0.2 mass%.

The mole ratio of the allophanate group to the symmetric-asymmetric isocyanurate group measured by $^1$H-NMR was, allophanate group/symmetric-asymmetric isocyanurate group = 100/3.

The mole ratio of the uretdione group to the symmetric-asymmetric isocyanurate group measured by $^{13}$C-NMR was, uretdione group/symmetric-asymmetric isocyanurate group = 0/3.

The ratio of the allophanate bimolecular product relative to the aliphatic polyisocyanate derivative by the GPC measurement was 71 mass%.

Preparation Example 13 (isocyanate (a-13)(PDI derivative))

A four-neck flask equipped with a thermometer, stirrer, reflux tube, and nitrogen inlet tube was charged with 500 parts by mass of pentamethylene diisocyanate produced in the same manner as in Example 1 of description of WO2012/121291, 0.5 parts by mass of isobutylalcohol, 0.3 parts by mass of 2,6-di(tert-butyl)-4-methylphenol, and 0.3 parts by mass of tris(tridecyl)phosphite, and the mixture was allowed to react at 80°C for 2 hours.

Then, 0.05 parts by mass of N-(2-hydroxypropyl)-N,N,N-trimethylammonium-2-ethylhexanoate as the trimerization catalyst was blended. The isocyanate group concentration was measured, and reaction was continued until the concentration reached 51.7 mass% (that is, conversion rate 5 mass%). 0.12 parts by mass of o-toluenesulfonamide was added after 50 minutes when a predetermined conversion rate (conversion rate 5 mass%) was reached. The obtained reaction mixture liquid was allowed to pass through a thin film distillation device (temperature: 150°C, degree of vacuum: 0.093kPa) to remove the unreacted pentamethylene diisocyanate monomer, and furthermore, relative to 100 parts by mass of the produced residue, 0.02 parts by mass of o-toluenesulfonamide and 0.003 parts by mass of benzoyl chloride were added, thereby producing isocyanate (a-13).

The isocyanate (a-13) had an isocyanate monomer concentration of 0.6 mass%, an isocyanate group concentration of 25.2 mass%, and a viscosity at 25°C of 1380 mPa·s.

The mole ratio of the allophanate group to the symmetric-asymmetric isocyanurate group measured by $^1$H-

NMR was, allophanate group/symmetric-asymmetric isocyanurate group = 12.5/100.

The mole ratio of the uretdione group to the symmetric-asymmetric isocyanurate group measured by $^{13}$C-NMR was, uretdione group/symmetric-asymmetric isocyanurate group = 1/100.

The ratio of the allophanate bimolecular product relative to the aliphatic polyisocyanate derivative by the GPC measurement was 0 mass%.

Preparation Example 14 (isocyanate (a-14)(PDI + 1,3-H$_6$XDI derivative))

A reactor equipped with a thermometer, stirrer, nitrogen inlet tube, and condenser tube was charged with 468.9 parts by mass of pentamethylene diisocyanate produced in the same manner as in Example 1 of description of WO2012/121291, 31.1 parts by mass of 1,3-bis(isocyanatomethyl) cyclohexane (1,3-H$_6$XDI), 23.7 parts by mass of isobutanol, 0.3 parts by mass of 2,6-di(t-butyl)-4-methylphenol, and 0.3 parts by mass of tris(tridecyl)phosphite in a nitrogen atmosphere, and the mixture was subjected to urethane-forming reaction at 85°C for 3 hours.

Then, 0.02 parts by mass of tris (2-ethylhexanoic acid) bismuth was added as the allophanate-formation catalyst, and the reaction was continued until the isocyanate group concentration reached a calculated value (46.2 mass%). Thereafter, 0.02 parts by mass of o-toluenesulfonamide was added.

Thereafter, the obtained reaction solution was allowed to pass through a thin film distillation device (degree of vacuum 0.093KPa, temperature 160°C) to remove the unreacted pentamethylene diisocyanate and 1,3-bis(isocyanatomethyl) cyclohexane, and furthermore, 0.02 parts by mass of o-toluenesulfonamide relative to 100 parts by mass of the produced residue was added, thereby producing isocyanate (a-14).

The produced isocyanate (a-14) had an isocyanate group concentration of 19.7 mass%, a viscosity at 25°C of 310 mPa·s, and an isocyanate monomer concentration of 0.2 mass%.

The mole ratio of the allophanate group to the symmetric-asymmetric isocyanurate group measured by $^1$H-NMR was, allophanate group/symmetric-asymmetric isocyanurate group = 100/2.

The mole ratio of the uretdione group to the symmetric-asymmetric isocyanurate group measured by $^{13}$C-NMR was, uretdione group/symmetric-asymmetric isocyanurate group = 0/2.

The ratio of the allophanate bimolecular product relative to the aliphatic polyisocyanate derivative by the GPC measurement was 69 mass%.

Preparation Example 1

Isophorone diisocyanate monomer (IPDI, VESTANAT IPDI, manufactured by Evonic Corporation) was prepared as the polyisocyanate component.

[Table 1]

| No. | | Preparation Example 1 | Preparation Example 2 | Preparation Example 3 | Preparation Example 4 |
|---|---|---|---|---|---|
| Aliphatic polyisocy anate type | | PDI | PDI | PDI | PDI |
| Isocyanate | | a-1 | a-2 | a-3 | a-4 |
| Mole ratio (NMR method) | Isocyanurate group | 100.0 | 100.0 | 100.0 | 0.0 |
| | Allophanate group | 7.4 | 54.0 | 33.0 | 0.0 |
| | Uretdione group | 1.0 | 0.0 | 0.5 | 100.0 |
| Content (mol%) | Isocyanurate group | 92.3 | 64.9 | 74.9 | 0.0 |
| | Allophanate group | 6.8 | 35.1 | 24.7 | 0.0 |
| | Uretdione group | 0.9 | 0.0 | 0.4 | 100.0 |
| Viscosity (25°C) | mPa·s | 2000 | 900 | 950 | 24 |

(continued)

| No. | | Preparation Example 1 | Preparation Example 2 | Preparation Example 3 | Preparation Example 4 |
|---|---|---|---|---|---|
| Isocyanate group concentration | Mass% | 24.7 | 23.5 | 23.7 | 26.5 |
| Bimolecular product area percentage | % | 0 | 28 | 21 | 0 |
| No. of hydroxy groups ups in alcohol | | 1 | 1 | 1 | - |
| No. | | Preparation Example 5 | Preparation Example 6 | Preparation Example 7 | Preparation Example 8 |
| Aliphatic polyisocy anate type | | PDI | PDI | PDI | PDI |
| Isocyanate | | a-5 | a-6 | a-7 | a-8 |
| Mole ratio (NMR method) | Isocyanurate group | 3.0 | 3.0 | 100.0 | 100.0 |
| | Allophanate group | 100.0 | 100.0 | 33.0 | 6.0 |
| | Uretdione group | 0.0 | 0.0 | 1.0 | 1.0 |
| Content (mol%) | Isocyanurate group | 2.9 | 2.9 | 74.6 | 93.5 |
| | Allophanate group | 97.1 | 97.1 | 24.6 | 5.6 |
| | Uretdione group | 0.0 | 0.0 | 0.7 | 0.9 |
| Viscosity (25°C) | mPa·s | 200 | 360 | 2200 | 1480 |
| Isocyanate group concentration | Mass% | 20.4 | 22.4 | 23.6 | 23.6 |
| Bimolecular product area percentage | % | 67 | 0 | 0 | 0 |
| No. of hydroxy groups ups in alcohol | | 1 | 2 | 2 | 2 |
| No. | | Preparation Example 9 | Preparation Example 10 | Preparation Example 11 | Preparation Example 12 |
| Aliphatic polyisocy anate type | | HDI | HDI | HDI | HDI |
| Isocyanate | | a-9 | a-10 | a-11 | a-12 |
| Mole ratio (NMR method) | Isocyanurate group | 100.0 | 100.0 | 0.0 | 3.0 |
| | Allophanate group | 8.1 | 34.3 | 0.0 | 100.0 |
| | Uretdione group | 1.0 | 0.0 | 100.0 | 0.0 |

(continued)

| No. | | Preparation Example 9 | Preparation Example 10 | Preparation Example 11 | Preparation Example 12 |
|---|---|---|---|---|---|
| Content (mol%) | Isocyanurate group | 91.7 | 74.5 | 0.0 | 2.9 |
| | Allophanate group | 7.4 | 25.5 | 0.0 | 97.1 |
| | Uretdione group | 0.9 | 0.0 | 100.0 | 0.0 |
| Viscosity (25°C) | mPa·s | 1460 | 840 | 40 | 300 |
| Isocyanate group concentration | Mass% | 23.0 | 22.1 | 25.7 | 19.3 |
| Bimolecular product area percentage | % | 31 | 0 | 0 | 71 |
| No. of hydroxy groups ups in alcohol | | 1 | 1 | - | 1 |

| No. | | Preparation Example 13 | Preparation Example 14 | |
|---|---|---|---|---|
| Aliphatic polyisocy anate type | | PDI | PDI+1,3 -$H_6$XDI | |
| Isocyanate | | a-13 | a-14 | |
| Mole ratio (NMR method) | Isocyanurate group | 100.0 | 2.0 | |
| | Allophanate group | 12.5 | 100.0 | |
| | Uretdione group | 1.0 | 0.0 | |
| Content (mol%) | Isocyanurate group | 88.1 | 2.0 | |
| | Allophanate group | 11.0 | 98.0 | |
| | Uretdione group | 0.9 | 0.0 | |
| Viscosity (25°C) | mPa·s | 1380 | 310 | |
| Isocyanate group concentration | Mass% | 25.2 | 19.7 | |
| Bimolecular product area percentage | % | 0 | 69 | |
| No. of hydroxy grou ps in alcohol | | 1 | 1 | |

In Table 1, the isocyanurate group means the symmetric-asymmetric isocyanurate group.

(2) Polyol component (b)

(Polyol (b-1))

Polyetherpolyol (manufactured by Mitsui Chemicals, Inc., trade name: ACTCOL LR-00, number average molecular weight (Mn) 1600, functionality f= 3, OH value = 110 mgKOH/g)

(Polyol (b-2))

Polyetherpolyol (manufactured by Mitsui Chemicals, Inc., trade name: ACTCOL T-700, number average molecular weight (Mn) 700, functionality f = 3, OH value = 240 mgKOH/g)

(3) Catalyst (c)

(Catalyst (c-1))

33 mass% dipropylene glycol solution of triethylene diamine (manufactured by Air Products and Chemicals, Inc., trade name: Dabco-33 LV)

(Catalyst (c-2))

70 mass% dipropylene glycol solution of bis(dimethylaminoethyl) ether (manufactured by Momentive Performance Materials Inc., trade name: Niax-A1)

(Catalyst (c-3))

Organotin compound (manufactured by Momentive Performance Materials Inc., trade name: Formrez UL-28)

(Catalyst (c-4))

Organotin compound ((manufactured by Mitsubishi chemical corporation, trade name: Stanoct)

(4) Blowing agent (d)

(Blowing agent (d-1))

Pure water ($H_2O$)

(5) Foam stabilizer (e)

(Foam stabilizer (e-1))

Silicone foam stabilizer (manufactured by Evonic Corporation, trade name: B-8545)

(Foam stabilizer (e-2))

Silicone foam stabilizer (manufactured by Evonic Corporation, trade name: B-8002)

(6) Stabilizer (f)

(Stabilizer (f-1))

Hindered amine compound (light stabilizer, manufactured by BASF Japan, trade name: TINUVIN 765)

(Stabilizer (f-2))

Organic phosphorus compound (antioxidant, manufactured by Johoku Chemical Co. Ltd., trade name: JP-308E)

3. Examples 1 to 13 and Comparative Examples 1 to 10 (polyurethane foam production)

(1) Example 1

Of the component (ingredient) shown in Table 2, the components other than the polyisocyanate component are weighed in a laboratory of a temperature of 23 °C and a relative humidity of 55%. They are blended in accordance with the mixing formulation shown in Table 2, and they are stirred and mixed so that they are homogeneous, thereby preparing a premix.

A separately prepared polyisocyanate component was weighed in accordance with the mixing formulation shown in Table 2, and the temperature was adjusted to be 23°C. The symmetric-asymmetric isocyanurate group concentration, allophanate group concentration, and uretdione group concentration in the polyisocyanate component are calculated.

Thereafter, a polyisocyanate component was added to the premix, and they are stirred with a hand-mixer (number of revolution 5000 rpm) for 15 seconds. Immediately thereafter, it was quickly put in a wooden box to foam. Polyurethane foam was produced in this manner.

(2) Examples 2 to 13 and Comparative Examples 1 to 10

A polyurethane foam was produced in the same manner as in Example 1, except that the components were weighed in accordance with the mixing formulation shown in Tables 2 to 4 below.

The mixing formulation in Examples 1 to 13 and Comparative Examples 1 to 10, and characteristics of the polyisocyanate component are shown in Tables 2 to 4.

4. Evaluation of polyurethane foam

<Reaction time (cream time (CT))>

The cream time was measured as the time from the start of stirring with the hand-mixer to the start of the mixture moving by reaction between the premix and the polyisocyanate component in production of the polyurethane foam of Examples and Comparative Examples.

<Healthy bubble (HB)>

The healthy bubble was measured as the time from the start of stirring with the hand-mixer to the start of releasing gas from the upper face of the polyurethane foam by opening and connecting of the cells in production of the polyurethane foam of Examples and Comparative Examples.

<Density (unit: $kg/m^3$)>

A rectangular parallelepiped having a size of $10 \times 10 \times 5$ cm was cut out from the center portion (core) of the polyurethane foam of Examples and Comparative Examples to make a measurement sample, and thereafter, apparent density of the measurement sample was measured in accordance with JIS K7222 (2005).

<Hardness (25%CLD)(unit: $N/100\ cm^2$)>

A rectangular parallelepiped having a size of $10 \times 10 \times 5$ cm was cut out from the center portion (core) of the polyurethane foam of Examples and Comparative Examples to make a measurement sample, and thereafter, hardness(25%CLD) of the measurement sample was measured in accordance with JIS K-6400 (2012).

<Air permeability (unit: $cc/cm^2/sec$)>

The center portion (core) of the polyurethane foam of Examples and Comparative Examples was cut out to make a measurement sample having a thickness of 10 mm, and thereafter, air permeability of the measurement sample was measured in accordance with method B of JIS K-6400-7 (2004).

<Ball rebound (unit: %)>

A rectangular parallelepiped having a size of $10 \times 10 \times 5$ cm was cut out from the center portion (core) of the polyurethane foam of Examples and Comparative Examples to make a measurement sample, and thereafter, rebound resilience (Ball rebound) of the measurement sample was measured in accordance with JIS K-6400(2012).

<Laundry durability (unit: %)>

A rectangular parallelepiped having a size of $60 \times 60 \times 20$ mm was cut out from the center portion (core) of the polyurethane foam of Examples and Comparative Examples to make a measurement sample. Thereafter, the measurement sample was immersed in a 5% aqueous solution of a detergent (Atack NEO manufactured by Kao Corporation) at 23 °C for 24 hours. Thereafter, the length of the measurement sample was measured in a state where the measurement sample was immersed in the 5% aqueous solution of detergent, and the linear expansion coefficient was calculated based on the measured value (= sample length after immersion) using the formula below.

$$\text{Linear expansion coefficient (\%)} = \{(\text{sample length after immersion} - \text{sample length before immersion})/(\text{sample length before immersion})\} \times 100$$

It was determined that the smaller linear expansion coefficient (%) shows excellent laundry durability.

Tables 2 to 4 show the evaluation of polyurethane foam of Examples 1 to 13 and Comparative Examples 1 to 10.

[Table 2]

| No. | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Polyisocyanate component (parts by mass) | a-1 | NCO24.7%, Monohydric alcohol-modified | - | - | 75 | - | - | - | - | - | - |
| | a-2 | NCO23.5%, Monohydric alcohol-modified | 100 | - | - | - | - | - | - | - | - |
| | a-3 | NCO23.7%, Monohydric alcohol-modified | - | 100 | 25 | 30 | 40 | 70 | 70 | 97 | - |
| | a-4 | NCO26.5%, No alcohol modification | - | - | - | - | - | - | - | - | - |
| | a-5 | NCO20.4%, Monohydric alcohol-modified | - | - | - | 70 | 60 | 30 | - | - | 30 |
| | a-6 | NCO22.4%, Dihydric alcohol-modified | - | - | - | - | - | - | - | - | - |
| | a-7 | NCO23.6%, Dihydric alcohol-modified | - | - | - | - | - | - | - | - | - |
| | a-8 | NCO23.6%, Dihydric alcohol-modified | - | - | - | - | - | - | - | - | 70 |
| | a-9 | NCO23.0%, Monohydric alcohol-modified | - | - | - | - | - | - | - | - | - |
| | a-10 | NCO22.1%, Monohydric alcohol-modified | - | - | - | - | - | - | - | - | - |
| | a-11 | NCO25.7%, No alcohol modification | - | - | - | - | - | - | - | - | - |
| | a-12 | NCO19.3%, Monohydric alcohol-modified | - | - | - | - | - | - | - | - | - |
| | a-13 | NCO25.2%, Monohydric alcohol-modified | - | - | - | - | - | - | - | - | - |
| | a-14 | NCO19.7%, Monohydric alcohol-modified | - | - | - | - | - | - | 30 | - | - |
| | IPDI | Monomer | - | - | - | - | - | - | - | 3 | - |
| Resin premix (parts by mass) | Polyol component (b) | (b-1)ACTCOL LR-00 | 70 | 70 | 70 | 70 | 70 | 70 | 70 | 70 | 70 |
| | | (b-2)ACTCOL RT-700 | 30 | 30 | 30 | 30 | 30 | 30 | 30 | 30 | 30 |
| | Catalyst (c) | (c-1)Dabco 33LV | 0.5 | 0.5 | 0.5 | 0.5 | 0.5 | 0.5 | 0.5 | 0.5 | 0.5 |
| | | (c-2)Niax A-1 | 2.5 | 2.5 | 2.5 | 2.5 | 2.5 | 2.5 | 2.5 | 2.5 | 2.5 |
| | | (c-3)Formrez UL-28 | 0.2 | 0.2 | 0.2 | 0.2 | 0.2 | 0.2 | 0.2 | 0.2 | 0.2 |
| | | (c-4)Stanoct | 0.4 | 0.4 | 0.4 | 0.4 | 0.4 | 0.4 | 0.4 | 0.4 | 0.4 |
| | Blowing agent (d) | (d-1)Water(H₂O) | 5 | 5 | 5 | 5 | 5 | 5 | 5 | 5 | 5 |
| | Foam stabilizer (e) | (e-1)B-8545 | - | - | - | - | - | - | - | - | - |
| | | (e-2)B-8002 | 1.00 | 1.00 | 1.00 | 1.00 | 1.00 | 1.00 | 1.00 | 1.00 | 1.00 |
| | Stabilizer (f) | (f-1)Tin.765 | 1.2 | 1.2 | 1.2 | 1.2 | 1.2 | 1.2 | 1.2 | 1.2 | 1.2 |
| | | (f-2)JP-308E | 1.0 | 1.0 | 1.0 | 1.0 | 1.0 | 1.0 | 1.0 | 1.0 | 1.0 |
| Isocyanate index | | | 70 | 70 | 70 | 70 | 70 | 70 | 70 | 70 | 70 |
| Physical properties of polyisocyanate component | | Isocyanurate group concentration (mol%) | 65.0 | 75.0 | 87.9 | 24.5 | 31.7 | 53.3 | 53.0 | 72.7 | 66.3 |
| | | Allophanate group concentration (mol%) | 35.0 | 24.6 | 11.3 | 75.4 | 68.1 | 46.4 | 46.7 | 24.0 | 33.1 |
| | | Uretdione group concentration (mol%) | 0.0 | 0.4 | 0.8 | 0.0 | 0.1 | 0.3 | 0.3 | 0.4 | 0.6 |
| | | Viscosity at 25°C (mPa·s) | 900 | 950 | 1700 | 550 | 630 | 770 | 720 | 944 | 1100 |
| | | Isocyanate group concentration (%) | 23.5 | 23.7 | 24.4 | 21.4 | 21.7 | 22.7 | 22.5 | 24.1 | 22.6 |
| | | Allophanate bimolecular product concentration (%) | 28.0 | 21.0 | 5.3 | 53.2 | 48.6 | 34.8 | 35.4 | 20.4 | 20.1 |
| Polyurethane foam evaluation | | Reaction time (CT) (sec) | 49 | 49 | 47 | 57 | 55 | 50 | 49 | 47 | 48 |
| | | Healthy bubble (HB)(sec) | 337 | 319 | 287 | 397 | 381 | 363 | 362 | 293 | 340 |
| | | Density (kg/m³) | 38.0 | 38.2 | 41.5 | 37.8 | 38.0 | 38.1 | 39.6 | 38.2 | 39.2 |
| | | Hardness (N/100 cm²) | 4.9 | 5.0 | 13.0 | 5.3 | 5.1 | 4.6 | 4.8 | 5.0 | 9.2 |
| | | Air permeability (cc/cm²/sec) | 246 | 257 | 192 | 167 | 198 | 206 | 201 | 235 | 177 |
| | | Ball rebound (%) | 9 | 10 | 26 | 7 | 7 | 8 | 10 | 12 | 12 |
| | | Laundry durability (linear expansion coefficient(%)) | 1.0 | 0.8 | 3.2 | 4.5 | 3.8 | 2.7 | 2.4 | 3.8 | 4.2 |

[Table 3]

| No. | | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|
| Polyisocyanate component (parts by mass) | a-1 | NCO24.7%, Monohydric alcohol-modified | 100 | - | - | - | - | - | - |
| | a-2 | NCO23.5%, Monohydric alcohol-modified | - | 80 | - | - | - | - | - |
| | a-3 | NCO23.7%, Monohydric alcohol-modified | - | - | 20 | - | - | - | - |
| | a-4 | NCO26.5%, No alcohol modification | - | 20 | - | - | - | - | - |
| | a-5 | NCO20.4%, Monohydric alcohol-modified | - | - | 80 | - | 30 | 30 | - |
| | a-6 | NCO22.4%, Dihydric alcohol-modified | - | - | - | - | 20 | 20 | - |
| | a-7 | NCO23.6%, Dihydric alcohol-modified | - | - | - | 97.5 | 50 | - | - |
| | a-8 | NCO23.6%, Dihydric alcohol-modified | - | - | - | - | - | 50 | - |
| | a-9 | NCO23.0%, Monohydric alcohol-modified | - | - | - | - | - | - | - |
| | a-10 | NCO22.1%, Monohydric alcohol-modified | - | - | - | - | - | - | - |
| | a-11 | NCO25.7%, No alcohol modification | - | - | - | - | - | - | - |
| | a-12 | NCO19.3%, Monohydric alcohol-modified | - | - | - | - | - | - | - |
| | a-13 | NCO25.2%, Monohydric alcohol-modified | - | - | - | - | - | - | 100 |
| | a-14 | NCO19.7%, Monohydric alcohol-modified | - | - | - | - | - | - | - |
| | IPDI | Monomer | - | - | - | 2.5 | - | - | - |
| Resin premix (parts by mass) | Polyol component (b) | (b-1)ACTCOL LR-00 | 70 | 70 | 70 | 70 | 70 | 70 | 70 |
| | | (b-2)ACTCOL T-700 | 30 | 30 | 30 | 30 | 30 | 30 | 30 |
| | Catalyst (c) | (c-1)Dabco 33LV | 0.5 | 0.5 | 0.5 | 0.5 | 0.5 | 0.5 | 0.5 |
| | | (c-2)Niax A-1 | 2.5 | 2.5 | 2.5 | 2.5 | 2.5 | 2.5 | 2.5 |
| | | (c-3)Formrez UL-28 | 0.2 | 0.2 | 0.2 | 0.2 | 0.2 | 0.2 | 0.2 |
| | | (c-4)Stanoct | 0.4 | 0.4 | 0.4 | 0.4 | 0.4 | 0.4 | 0.4 |
| | Blowing agent (d) | (d-1)Water($H_2O$) | 5 | 5 | 5 | 5 | 5 | 5 | 5 |
| | Foam stabilizer (e) | (e-1)B-8545 | - | - | - | - | - | - | - |
| | | (e-2)B-8002 | 1.00 | 1.00 | 1.00 | 1.00 | 1.00 | 1.00 | 1.00 |
| | Stabilizer (f) | (f-1)Tin.765 | 1.2 | 1.2 | 1.2 | 1.2 | 1.2 | 1.2 | 1.2 |
| | | (f-2)JP-308E | 1.0 | 1.0 | 1.0 | 1.0 | 1.0 | 1.0 | 1.0 |
| Isocyanate index | | | 70 | 70 | 70 | 70 | 70 | 70 | 70 |
| Physical properties of polyisocyanate component | | Isocyanurate group concentration (mol%) | 92.3 | 51.9 | 17.3 | 74.6 | 38.8 | 48.2 | 88.1 |
| | | Allophanate group concentration (mol%) | 6.8 | 28.1 | 82.6 | 24.6 | 60.9 | 51.3 | 11.0 |
| | | Uretdione group concentration (mol%) | 0.9 | 20.0 | 0.0 | 0.7 | 0.4 | 0.5 | 0.9 |
| | | Viscosity at 25°C (mPa·s) | 2000 | 725 | 350 | 2200 | 1130 | 750 | 1380 |
| | | Isocyanate group concentration (%) | 24.6 | 24.1 | 21.1 | 24.0 | 22.4 | 22.4 | 25.2 |
| | | Allophanate bimolecular product concentration (%) | 0.0 | 22.4 | 57.8 | 0.0 | 20.1 | 20.1 | 0.0 |
| Polyurethane foam evaluation | | Reaction time (CT)(sec) | 46 | 48 | 55 | 52 | 50 | 48 | 43 |
| | | Healthy bubble (HB)(sec) | 251 | 398 | 466 | 250 | 308 | 370 | 260 |
| | | Density (kg/m³) | 41.9 | 37.6 | 36.6 | 43.5 | 40.1 | 39.2 | 40.5 |
| | | Hardness (N/100 cm²) | 15.2 | 5.1 | 4.0 | 16.1 | 11.3 | 9.2 | 9.8 |
| | | Air permeability (cc/cm²/sec) | 38 | 78 | 98 | 62 | 81 | 96 | 94 |
| | | Ball rebound (%) | 28 | 10 | 9 | 23 | 18 | 12 | 20 |
| | | Laundry durability (linear expansion coefficient(%)) | 12.8 | 10.2 | 10.0 | 15.3 | 12.1 | 10.6 | 10.1 |

## EP 3 543 266 A1

[Table 4]

| No. | | | Example 10 | Example 11 | Example 12 | Example 13 | Comparative Example 8 | Comparative Example 9 | Comparative Example 10 |
|---|---|---|---|---|---|---|---|---|---|
| Polyisocyanate component (parts by mass) | a-1 | NCO24.7%, Monohydric alcohol-modified | - | - | - | - | - | - | - |
| | a-2 | NCO23.5%, Monohydric alcohol-modified | - | - | - | - | - | - | - |
| | a-3 | NCO23.7%, Monohydric alcohol-modified | - | - | - | - | - | - | - |
| | a-4 | NCO26.5%, No alcohol modification | - | - | - | - | - | - | - |
| | a-5 | NCO20.4%, Monohydric alcohol-modified | - | - | - | - | - | - | - |
| | a-6 | NCO22.4%, Dihydric alcohol-modified | - | - | - | - | - | - | - |
| | a-7 | NCO23.6%, Dihydric alcohol-modified | - | - | - | - | - | - | - |
| | a-8 | NCO23.6%, Dihydric alcohol-modified | - | - | - | - | - | - | - |
| | a-9 | NCO23.0%, Monohydric alcohol-modified | - | - | - | - | - | 100 | - |
| | a-10 | NCO22.1%, Monohydric alcohol-modified | 100 | 75 | 30 | 50 | 5 | - | 80 |
| | a-11 | NCO25.7%, No alcohol modification | - | - | - | - | - | - | 20 |
| | a-12 | NCO19.3%, Monohydric alcohol-modified | - | 25 | 70 | 50 | 95 | - | - |
| | a-13 | NCO25.2%, Monohydric alcohol-modified | - | - | - | - | - | - | - |
| | a-14 | NCO19.7%, Monohydric alcohol-modified | - | - | - | - | - | - | - |
| | IPDI | Monomer | - | - | - | - | - | - | - |
| Resin premix (parts by mass) | Polyol component (b) | (b-1)ACTCOL LR-00 | 70 | 70 | 70 | 70 | 70 | 70 | 70 |
| | | (b-2)ACTCOL T-700 | 30 | 30 | 30 | 30 | 30 | 30 | 30 |
| | Catalyst (c) | (c-1)Dabco 33LV | 0.5 | 0.5 | 0.5 | 0.5 | 0.5 | 0.5 | 0.5 |
| | | (c-2)Niax A-1 | 2.5 | 2.5 | 2.5 | 2.5 | 2.5 | 2.5 | 2.5 |
| | | (c-3)Formrez UL-28 | 0.2 | 0.2 | 0.2 | 0.2 | 0.2 | 0.2 | 0.2 |
| | | (c-4)Stanoct | 0.4 | 0.4 | 0.4 | 0.4 | 0.4 | 0.4 | 0.4 |
| | Blowing agent (d) | (d-1)Water($H_2O$) | 5 | 5 | 5 | 5 | 5 | 5 | 5 |
| | Foam stabilizer (e) | (e-1)B-8545 | - | - | - | - | - | - | - |
| | | (e-2)B-8002 | 1.00 | 1.00 | 1.00 | 1.00 | 1.00 | 1.00 | 1.00 |
| | Stabilizer (f) | (f-1)Tin.765 | 1.2 | 1.2 | 1.2 | 1.2 | 1.2 | 1.2 | 1.2 |
| | | (f-2)JP-308E | 1.0 | 1.0 | 1.0 | 1.0 | 1.0 | 1.0 | 1.0 |
| Isocyanate index | | | 70 | 70 | 70 | 70 | 70 | 70 | 70 |
| Physical properties of polyisocyanate component | | Isocyanurate group concentration (mol%) | 74.5 | 56.6 | 24.4 | 38.7 | 6.5 | 91.7 | 59.6 |
| | | Allophanate group concentration (mol%) | 25.5 | 43.4 | 75.6 | 61.3 | 93.5 | 7.4 | 20.4 |
| | | Uretdione group concentration (mol%) | 0.0 | 0.0 | 0.0 | 0.0 | 0.0 | 1.0 | 20.0 |
| | | Viscosity at 25°C (mPa·S) | 900 | 720 | 580 | 640 | 350 | 1500 | 700 |
| | | Isocyanate group concentration (%) | 22.1 | 21.4 | 20.1 | 20.7 | 19.4 | 23.0 | 22.8 |
| | | Allophanate bimolecular product concentration (%) | 31.0 | 41.0 | 59.0 | 51.0 | 69.0 | 0.0 | 24.8 |
| Polyurethane foam evaluation | | Reaction time (CT)(sec) | 52 | 54 | 62 | 58 | 59 | 50 | 50 |
| | | Healthy bubble (HB)(sec) | 330 | 270 | 237 | 259 | 231 | 461 | 262 |
| | | Density (kg/m³) | 40.4 | 41.2 | 40.8 | 39.9 | 43.2 | 43.6 | 39.2 |
| | | Hardness (N/100 cm²) | 7.6 | 7.9 | 8.7 | 9.3 | 10.5 | 16.2 | 13.4 |
| | | Air permeability (cc/cm²/sec) | 220 | 198 | 154 | 173 | 97 | 28 | 62 |
| | | Ball rebound (%) | 13 | 15 | 25 | 22 | 31 | 13 | 11 |
| | | Laundry durability (linear expansion coefficient(%)) | 1.2 | 2.3 | 5.2 | 5.1 | 7.8 | 12.2 | 10.3 |

[Details of abbreviations used in Tables 2 to 4]

Details of the abbreviations used in Tables 2 to 4 are shown below.

IPDI: isophoronediisocyanate, VESTANAT IPDI, manufactured by Evonic Corporation
ACTCOL LR-00: polyetherpolyol (manufactured by Mitsui Chemicals, Inc., number average molecular weight (Mn) 1600, functionality f = 3, OH value = 110 mgKOH/g)
ACTCOL T-700: polyetherpolyol (manufactured by Mitsui Chemicals, Inc., number average molecular weight (Mn) 700, functionality f = 3, OH value = 240 mgKOH/g)
Dabco 33 LV: 33 mass% dipropylene glycol solution of triethylenediamine (manufactured by Air Products and Chemicals, Inc.)
Niax A-1: 70 mass% dipropylene glycol solution of bis(dimethylaminoethyl) ether (manufactured by Momentive Performance Materials Inc.)
Formrez UL-28: organotin compound (manufactured by Momentive Performance Materials Inc.)
Stanoct: organotin compound (manufactured by Mitsubishi Chemical Corporation)
B-8545: silicone foam stabilizer (manufactured by Evonic Corporation)
B-8002: silicone foam stabilizer (manufactured by Evonic Corporation)
Tin.765: hindered amine compound (light stabilizer, manufactured by BASF Japan)
JP-308E: organic phosphorus compound (antioxidant, manufactured by Johoku Chemical Co. Ltd.)

In Tables 2 to 4, the isocyanurate group means the symmetric-asymmetric isocyanurate group.
While the illustrative embodiments of the present invention are provided in the above description, such is for illustrative purpose only and it is not to be construed as limiting in any manner. Modification and variation of the present invention that will be obvious to those skilled in the art is to be covered by the following claims.

Industrial Applicability

The polyurethane foam of the present invention can be used for shoulder pads, knee pads, elbow pads, bathing suit pads, tongue portion and insole for shoes, medical materials, and apparel materials, and particularly suitable for brassiere pads and brassiere cups as a molded article of the apparel material.

**Claims**

1. Polyurethane foam being a reaction/foaming product of a polyisocyanate component containing an aliphatic polyisocyanate derivative and a polyol component,
   wherein the derivative has an isocyanate group concentration of 25 mass% or less,
   the derivative contains an isocyanurate derivative of aliphatic polyisocyanate and an allophanate derivative of aliphatic polyisocyanate,
   the allophanate derivative is a reaction product of aliphatic polyisocyanate and monohydric alcohol,
   the allophanate group content relative to a total amount of the polyisocyanate component is 10 mol% or more and 80 mol% or less, and
   the uretdione group content relative to a total amount of the polyisocyanate component is less than 10 mol%.

2. The polyurethane foam according to Claim 1, wherein the polyisocyanate component has a viscosity at 25°C of more than 600 mPa·s and 3000 mPa·s or less.

3. The polyurethane foam according to Claim 1, wherein the derivative contains an allophanate bimolecular product of aliphatic polyisocyanate, and contains 5 mass% or more and 90 mass% or less of the allophanate bimolecular product of the aliphatic polyisocyanate relative to a total amount of the polyisocyanate component.

4. The polyurethane foam according to Claim 1, wherein the aliphatic polyisocyanate contains pentamethylene diisocyanate and/or hexamethylene diisocyanate.

5. The polyurethane foam according to Claim 4, wherein the aliphatic polyisocyanate further contains alicyclic polyisocyanate.

6. An apparel material including the polyurethane foam according to Claim 1.

**7.** A brassiere pad, being a molded article of the apparel material according to Claim 6.

**8.** A brassiere cup including the brassiere pad according to Claim 7.

**9.** A method for producing polyurethane foam, the method including:

allowing aliphatic polyisocyanate to react with monohydric alcohol to prepare an aliphatic polyisocyanate derivative containing an isocyanurate derivative of aliphatic polyisocyanate and an allophanate derivative of aliphatic polyisocyanate, and

allowing the polyisocyanate component containing the derivative to react with a polyol component in the presence of a urethane-forming catalyst and a blowing agent,

wherein the derivative has an isocyanate group concentration of 25 mass% or less,

the allophanate group content relative to a total amount of the polyisocyanate component is 10 mol% or more and 80 mol% or less, and

the uretdione group content relative to a total amount of the polyisocyanate component is less than 10 mol%.

## INTERNATIONAL SEARCH REPORT

| International application No. |
| --- |
| PCT/JP2017/040761 |

A. CLASSIFICATION OF SUBJECT MATTER
Int.Cl.    C08G18/00(2006.01)i,    A41C3/10(2006.01)i,    A41C3/14(2006.01)i,
          A41D13/015(2006.01)i, C08G18/78(2006.01)i, C08G18/79(2006.01)i
According to International Patent Classification (IPC) or to both national classification and IPC

B. FIELDS SEARCHED

Minimum documentation searched (classification system followed by classification symbols)
Int.Cl. C08G18/00, A41C3/10, A41C3/14, A41D13/015, C08G18/78, C08G18/79

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2012-77209 A (NIPPON POLYURETHANE INDUSTRY CO., LTD.)<br>19 April 2012, claims 1-4, 9-10, paragraphs [0001],<br>[0010], [0026]-[0030], adjustment examples 15-17,<br>21-25, 37, 38, examples 12-14, 18-21, 30, 31, comparative<br>example 9, tables 2, 4, 7, 9 & CN 102443133 A & TW 201226428<br>A | 1-9<br>6-8 |
| X<br>Y | JP 2005-48038 A (NIPPON POLYURETHANE INDUSTRY CO., LTD.)<br>24 February 2005, claims 1, 2, 4, paragraphs [0001],<br>[0015], [0028]-[0029], [0033], synthesis example 3,<br>example 9, tables 1, 2 (Family: none) | 1-9<br>6-8 |
| X<br>Y<br>A | JP 2010-195945 A (NIPPON POLYURETHANE INDUSTRY CO.,<br>LTD.) 09 September 2010, claims 1-7, paragraphs [0002],<br>[0039]-[0040], [0043], comparative examples 6-8, table<br>2 (Family: none) | 1, 3-5, 9<br>6-8<br>2 |
| X<br>Y | JP 2007-269954 A (ASAHI KASEI CHEMICALS CORP.) 18 October<br>2007, claim 3, paragraphs [0014], [0028], [0031],<br>[0047]-[0048], [0073], [0092], synthesis examples 2,<br>3, example 4, comparative example 1 (Family: none) | 1-5, 9<br>6-8 |

☒   Further documents are listed in the continuation of Box C.          ☐   See patent family annex.

| | |
| --- | --- |
| *       Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 30 January 2018 (30.01.2018) | 13 February 2018 (13.02.2018) |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
| --- | --- |

Form PCT/ISA/210 (second sheet) (January 2015)

**INTERNATIONAL SEARCH REPORT**

| International application No. |
| --- |
| PCT/JP2017/040761 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | US 2015/0158966 1 (BAYER MATERIALSCIENCE AG) 11 June 2015, claims 1-18, paragraphs [0027], [0069], example 8 & EP 2883895 A1 & CN 104693414 A | 1-5, 9<br>6-8 |
| A | JP 2004-149583 A (NIPPON POLYURETHANE INDUSTRY CO., LTD.) 27 May 2004, paragraph [0034] (Family: none) | 1-9 |
| A | JP 2011-94113 A (NIPPON POLYURETHANE INDUSTRY CO., LTD.) 12 May 2011, claims, examples & CN 102030881 A & TW 201120080 A | 1-9 |
| A | JP 2005-48179 A (ASAHI KASEI CHEMICALS CORP.) 24 February 2005, claims, examples & JP 2005-48180 A | 1-9 |
| A | JP 2006-52265 A (ASAHI KASEI CHEMICALS CORP.) 23 February 2006, claims, examples (Family: none) | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012077209 A
- JP S61129173 B

- WO 2012121291 A